(19) Europäisches Patentamt / European Patent Office / Office européen des brevets

(11) **EP 4 004 731 B1**

(12) **FASCICULE DE BREVET EUROPÉEN**

(45) Date de publication et mention
de la délivrance du brevet:
**14.05.2025 Bulletin 2025/20**

(21) Numéro de dépôt: **20742784.0**

(22) Date de dépôt: **24.07.2020**

(51) Classification Internationale des Brevets (IPC):
**G06F 9/54** *(2006.01)*

(52) Classification Coopérative des Brevets (CPC):
**G06F 9/54**

(86) Numéro de dépôt international:
**PCT/EP2020/071048**

(87) Numéro de publication internationale:
**WO 2021/014020 (28.01.2021 Gazette 2021/04)**

(54) **PROCÉDÉ DE TRANSMISSION DE DONNÉES**

DATENÜBERTRAGUNGSVERFAHREN

DATA TRANSMISSION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.07.2019 FR 1908420**

(43) Date de publication de la demande:
**01.06.2022 Bulletin 2022/22**

(73) Titulaire: **Nothing2Install**
**13001 Marseille (FR)**

(72) Inventeur: **BRULE, Sébastien**
**13001 MARSEILLE (FR)**

(74) Mandataire: **Hautier IP**
**20, rue de la Liberté**
**06000 Nice (FR)**

(56) Documents cités:
**FR-A1- 2 975 554     US-A1- 2013 007 221**

## Description

## DOMAINE TECHNIQUE

L'invention concerne le domaine des architectures client-serveur, la virtualisation des systèmes d'exploitation et les protocoles d'accès à distance aux systèmes d'exploitation et aux applications virtualisées.

## ÉTAT DE LA TECHNIQUE

Les appareils électroniques intelligents d'aujourd'hui sont généralement constitués d'une part de composants électroniques (processeurs, mémoires, interfaces pour la communication, écran, les mémoires externes et des capteurs comme les micros, cameras, GPS...), d'autre part de logiciel, dont la principale partie est appelée système d'exploitation, permettant notamment de faire exécuter des applications sur ces appareils.

Ces appareils sont par exemple : les téléphones mobiles modernes (smartphones), des tablettes à écran tactile, des ordinateurs fixes ou portables, des consoles de jeux ou encore des terminaux de réception de télévision.

Une importante partie de la maintenance de ces appareils électroniques est liée à la mise à jour de leur système d'exploitation et de leurs applications, ainsi que le support nécessaire à leur utilisation (dépannage, formation).

En effet : la taille des Systèmes d'exploitation peut atteindre plusieurs Giga octets (entre 10 et 30 généralement, notamment dans le cas des appareils grand public, qui donnent aujourd'hui accès au plus grand nombre d'applications (incluant celles donnant accès à des services, dont des navigateurs internet).

L'association du système d'exploitation et d'une ou plusieurs applications en train de s'y exécuter est consommatrice d'énergie et de mémoire supplémentaire à celle nécessaire à les installer.

Ces contraintes obligent les appareils qui utilisent ces systèmes d'exploitation à contenir suffisamment de puissance et de mémoires (volatiles et non volatiles).

Cette capacité de puissance et de mémoire est nécessaire pour d'une part contenir le système d'exploitation et certaines applications, et d'autre part pour pouvoir exécuter lesdites applications et cela avec des performances sans cesse croissantes.

Cette surenchère de puissance et de mémoire pose de nombreux problèmes, en particulier pour les fabricants, industriels, distributeurs d'appareils électroniques ou encore les fournisseurs d'applications pour ces appareils.

Ces problèmes sont multiples et vont des coûts de fabrication des appareils électroniques dont une grande partie est liée aux coûts des composants de mémoires et de la puissance de calcul, jusqu'aux problèmes de consommation énergétique.

De nombreuses problématiques se posent également aux utilisateurs. Parmi elles, la maintenance perpétuelle de leurs dispositifs, le stress inhérent à la perte, au vol ou à la casse de leurs appareils, ou encore une gestion complexe de l'autonomie énergétique et de l'espace disque disponible.

Un début de solution est apparu avec la virtualisation d'applications et principalement de jeux vidéo dont l'exécution ne se fait pas sur le terminal informatique de l'utilisateur mais sur un serveur informatique distant. Dans cette configuration client-serveur, le serveur informatique transmet au terminal informatique jouant alors le rôle de client un flux vidéo de sorte à ce que le terminal informatique ne fasse office que de dispositif d'affichage pour permettre le rendu visuel d'une application exécutée à distance sur un serveur. Ce type de solutions demande une bande passante très importante entre le serveur et le client bien que le flux vidéo puisse être compressé, ainsi qu'une puissance et des investissements importants au niveau du serveur informatique qui doit assurer l'exécution, le rendu des applications ou des jeux vidéos puis l'encodage de ce rendu au format vidéo.

De plus, lorsque le client veut piloter l'application ou le jeu vidéo, il doit transmettre des commandes de pilotage au serveur informatique, celui-ci doit les exécuter, puis convertir en flux vidéo le rendu de l'application ou bien du jeu vidéo, qui ensuite doit être transmis et décompressé par le terminal informatique. Il en résulte de lourds problèmes de latence mais également de qualité de rendu.

La demande de brevet US 2013/007221 A1 concerne un procédé permettant d'améliorer les techniques de téléchargement de ressources pour des applications pour réduire le temps de téléchargement.

Et la demande de brevet FR 2 975 554 A1 présente un procédé de transmission d'un contenu à un terminal dans lequel le contenu est adapté à l'utilisateur récepteur du contenu.

La présente invention a pour but de résoudre en partie au moins certaines de ces problématiques.

## RÉSUMÉ

La présente invention concerne un procédé de transmission depuis au moins un serveur informatique vers au moins un terminal informatique d'au moins une donnée D présentant au moins un premier attribut A, ledit au moins un serveur informatique étant en communication avec ledit terminal informatique, typiquement via un réseau de communication en partie au moins sans fil, ledit procédé comprenant au moins les phases successives suivantes :

i. Au moins une phase d'initialisation comprenant au moins les étapes suivantes :

a. Réception par ledit terminal informatique de ladite donnée D envoyée par l'au moins un serveur informatique;
b. Réception, depuis au moins un serveur informatique, par ledit terminal informatique d'un premier état A(n) dudit premier attribut A, ledit premier état A(n) étant associé à une première donnée temporelle désignée premier temps T(n) ;
c. Utilisation, en particulier affichage, par ledit terminal informatique de ladite donnée D selon le premier état A(n) dudit premier attribut A au premier temps T(n);
d. Réception par ledit terminal informatique:

- d'un deuxième état A(n+1) dudit premier attribut A correspondant à un deuxième temps T(n+1) depuis au moins un serveur informatique,
- Puis, calcul par ledit terminal informatique d'un premier paramètre d'évolution E(n) dudit premier attribut A en fonction de A(n) et de A(n+1) ;

- ou,

- du premier paramètre d'évolution E(n) dudit premier attribut A depuis au moins un serveur informatique,
- Puis, calcul par ledit terminal informatique du deuxième état A(n+1) en fonction de A(n) et de E(n) ;

ii. Au moins une phase d'évolution comprenant au moins les étapes suivantes :

- Utilisation par ledit terminal informatique de ladite donnée D selon le deuxième état A(n+1) dudit premier attribut A au deuxième temps T(n+1)
- Puis, calcul par ledit terminal informatique d'un troisième état A(n+2) dudit premier attribut A correspondant à un troisième temps T(n+3) en fonction de A(n) et/ou A(n+1), et de E(n) ;
- Puis, utilisation par ledit terminal informatique de ladite donnée D selon le troisième état A(n+2) dudit premier attribut A au troisième temps T(n+2).

- Ou,

- Réception par ledit terminal informatique d'un deuxième paramètre d'évolution E(n+1) dudit premier attribut A depuis au moins un serveur informatique, E(n+1) étant différent de E(n) ;
- Puis, Calcul par ledit terminal informatique d'un troisième état A(n+2) dudit premier attribut A correspondant à un troisième temps T(n+2) en fonction de A(n) et/ou A(n+1), et de E(n+1) ;
- Puis, Utilisation par ledit terminal informatique de ladite donnée D selon le troisième état A(n+2) dudit premier attribut A au troisième temps T(n+2).

- Ou,

- Réception par ledit terminal informatique d'un troisième état A(n+2) dudit premier attribut A au troisième temps T(n+2) depuis au moins un serveur informatique, A(n+2) étant différent de A(n+1) ;
- Puis, utilisation par ledit terminal informatique de ladite donnée D selon le troisième état A(n+2) dudit premier attribut A au troisième temps T(n+2).
- Puis, de préférence, calcul par ledit terminal informatique d'un troisième paramètre d'évolution E(n+1) dudit premier attribut A en fonction de A(n+1) et A(n+2) ;
- Puis, de préférence, calcul par ledit terminal informatique du quatrième état A(n+3) dudit premier attribut A au quatrième temps T(n+3) en fonction de A(n+2) et de E(n+1)
- Puis, de préférence, utilisation par ledit terminal informatique de ladite donnée D selon le quatrième état A(n+3) dudit premier attribut A au quatrième temps T(n+3).

De préférence l'utilisation par ledit terminal informatique de ladite donnée D est prise parmi au moins : un affichage de ladite donnée D via un dispositif d'affichage, une mémorisation de ladite donnée D via un dispositif de mémorisation, une analyse de ladite donnée D via un dispositif d'analyse.
Ainsi, le système proposé par l'invention est une architecture client-serveur de virtualisation de système d'exploitation et d'applications destinée aux appareils électroniques et utilisant un procédé prédictif de transmission et de compression de données à latence réduite, optimisant les besoins en bande passante réseau entre le serveur et ses clients (appareils électroniques).

Le terminal n'a besoin de recevoir que l'un parmi le paramètre d'évolution ou un état ultérieur. Il en déduit ensuite l'ensemble des états intermédiaires consécutifs à un état initial. Il peut ainsi calculer successivement l'ensemble des états ultérieurs. Ce calcul est interrompu lorsque le terminal reçoit de la part du serveur informatique une nouvelle information qui va amener le terminal à modifier le calcul des états ultérieurs. Cette nouvelle information peut être un nouveau paramètre d'évolution ou un nouvel état de l'attribut.

Ainsi, la présente invention permet de réduire la consommation de la bande passante du réseau de communication entre le terminal informatique et le serveur informatique. En effet, la présente invention permet de réduire la quantité d'information à transmettre en comparaison avec l'art antérieur.

La présente invention permet de réduire la latence de transmission, car elle peut l'annuler pendant les phases durant lesquelles le terminal déduit les états successifs des états précédents.

La présente invention permet une réduction, voire une élimination, de la latence via son procédé astucieux de transmission de données.

La présente invention permet de réduire la consommation énergétique des terminaux informatiques puisque les terminaux informatiques présentent un besoin en ressource système bien inférieur à celui de l'art antérieur.

En hébergeant le système d'exploitation et les applications au niveau du ou des serveurs informatiques, la présente invention permet de réduire le besoin d'espace mémoire du terminal par rapport aux solutions de l'art antérieur dans lesquelles le système d'exploitation et les applications sont hébergés sur le terminal.

La présente invention permet de conserver la version des applications actuelles puisque celles-ci sont exécutées sur un ou plusieurs serveurs informatiques ce qui est donc transparent au niveau du terminal utilisateur. Le terminal utilisateur n'apparait dès lors plus que comme un moyen de d'affichage et d'interaction avec une application délocalisée dans un serveur informatique. La présente invention permet ainsi de faciliter la mise à jour et la maintenance du système d'exploitation et des applications.

Enfin la présente invention permet une qualité de rendue très élevée en comparaison à l'art antérieur compte tenu de son procédé astucieux de transmission de donnée réduite au minimum, de préférence en permettant néanmoins au terminal de déduire de façon précise les états réels dans de nombreux cas.

En effet, au-delà de la compression de données, la présente invention réduit la quantité de données à transmettre nécessaire pour une qualité de rendu équivalente aux solutions actuelles. La présente invention offre ainsi une solution particulièrement efficace aux problèmes de latences rencontrés avec les solutions connues de virtualisation des applications.

La présente invention concerne également un procédé de transmission depuis au moins un serveur informatique vers au moins un terminal informatique d'au moins une donnée D présentant au moins un premier attribut A, ledit au moins un serveur informatique étant en communication avec ledit terminal informatique, ledit procédé comprenant au moins les phases suivantes :

   i. Au moins une phase d'initialisation comprenant au moins les étapes suivantes :

      a. Réception par ledit terminal informatique et depuis au moins un serveur informatique d'au moins :

         ▪ ladite donnée D;
         ▪ un premier état A(n) dudit premier attribut A correspondant à un premier temps T(n);

      b. Utilisation par ledit terminal informatique de ladite donnée D selon le premier état A(n) dudit premier attribut A au premier temps T(n);
      c. Réception par ledit terminal informatique :

         ▪ d'un deuxième état A(n+1) dudit premier attribut A correspondant à un deuxième temps T(n+1) depuis au moins un serveur informatique,
         ▪ Puis, calcul par ledit terminal informatique d'un premier paramètre d'évolution E(n) dudit premier attribut A en fonction de A(n) et de A(n+1) ;

         -    ou,

         ▪ du premier paramètre d'évolution E(n) dudit premier attribut A depuis au moins un serveur informatique,
         ▪ Puis, calcul par ledit terminal informatique du deuxième état A(n+1) en fonction de A(n) et de E(n) ;

   ii. Au moins une phase d'évolution comprenant au moins une itération des étapes suivantes :

a. Utilisation par ledit terminal informatique de ladite donnée D selon le deuxième état A(n+1) dudit premier attribut A au deuxième temps T(n+1) ;

b. Puis, calcul par ledit terminal informatique d'un troisième état A(n+2) dudit premier attribut A correspondant à un troisième temps T(n+2) en fonction de A(n) et/ou A(n+1) et de E(n) ;

c. Puis, utilisation par ledit terminal informatique de ladite donnée D selon le troisième état A(n+2) dudit premier attribut A au troisième temps T(n+2).

d. Au cours des étapes de la phase d'évolution, le premier paramètre d'évolution E(n) étant modifié en un deuxième paramètre d'évolution E(n+1), si :

■ ledit terminal informatique reçoit un deuxième paramètre d'évolution E(n+1) dudit premier attribut A depuis au moins un serveur informatique, E(n+1) étant différent de E(n) ; ledit calcul par ledit terminal informatique du troisième état A(n+2) correspondant au troisième temps T(n+2) étant alors en fonction de A(n) et/ou A(n+1) et de E(n+1) ;

e. Au cours des étapes de la phase d'évolution, le deuxième état A(n+1) étant modifié en un troisième état A(n+2), et le premier paramètre d'évolution E(n) étant modifié en un deuxième paramètre d'évolution E(n+1) si :

■ ledit terminal informatique reçoit depuis l'au moins un serveur informatique, un troisième état A(n+2) dudit premier attribut A correspondant à un troisième temps T(n+2), la phase d'évolution comprenant alors le calcul d'un deuxième paramètre d'évolution E(n+1) dudit premier attribut A, en fonction de A(n+1) et de A(n+2).

Et de préférence dans lequel l'utilisation par ledit terminal informatique de ladite donnée D est prise parmi au moins : un affichage de ladite donnée D via un dispositif d'affichage, une mémorisation de ladite donnée D via un dispositif de mémorisation, une analyse de ladite donnée D via un dispositif d'analyse.

La présente invention concerne aussi un produit programme d'ordinateur, de préférence enregistré sur un support non transitoire, comprenant des instructions, qui lorsqu'elles sont effectuées par au moins l'un parmi un processeur et un ordinateur exécute le procédé selon la présente invention.

La présente invention concerne également un circuit électronique comprenant une pluralité de composants électroniques configurés pour exécuter une série d'ordres mettant en œuvre le procédé selon la présente invention.

La présente invention concerne aussi un terminal informatique comprenant au moins un circuit électronique selon la présente invention.

La présente invention concerne également un système comprenant au moins un terminal informatique selon la présente invention et au moins un serveur informatique, ledit terminal informatique et ledit serveur informatique étant en communication l'un avec l'autre.

La présente invention concerne aussi un produit programme d'ordinateur, de préférence enregistré sur un support non transitoire, comprenant des instructions, qui lorsqu'elles sont effectuées par au moins l'un parmi un processeur et un ordinateur, font que l'au moins un parmi le processeur et l'ordinateur, envoie une série d'ordres à au moins un circuit électronique selon la présente invention.

La présente invention concerne un système comprenant une architecture client-serveur permettant de virtualiser les systèmes d'exploitation et les applications sur des serveurs distants, et de les rendre accessibles à distance à des clients au travers d'un procédé de transmission selon la présente invention.

La présente invention concerne procédé de transmission optimisée des flux qui transitent entre serveur et client.

De manière avantageuse, la présente invention permet de réduire la taille, les coûts de fabrication, la consommation électrique et les coûts de distribution et de maintenance des appareils électroniques grand public ou professionnels tout en améliorant l'expérience de leurs utilisateurs (téléphones mobiles, tablettes, ordinateurs personnels, écrans et décodeurs de télévision, consoles de jeux, électronique de véhicule, écrans de publicité, à titre non exhaustif).

De manière astucieuse, la présente invention permet aux appareils déjà existants de bénéficier de sa mise en œuvre. En effet, la présente invention est applicable aux dispositifs électroniques existants.

## BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

La figure 1 représente un système selon l'art antérieur.

La figure 2 représente un système selon un mode de réalisation de la présente invention.

La figure 3 représente un algorithme schématique du procédé de transmission selon un mode de réalisation de la présente invention.

La figure 4 représente une vue schématique du fonctionnement d'une partie du procédé de transmission selon un mode de réalisation de la présente invention.

La figure 5 représente un exemple de mise en œuvre du procédé de transmission selon un mode de réalisation de la présente invention.

La figure 6 représente un exemple de mise en œuvre du procédé de transmission selon un mode de réalisation de la présente invention.

La figure 7 représente un exemple de mise en œuvre du procédé de transmission selon un mode de réalisation de la présente invention.

La figure 8 représente un schéma illustrant une phase d'initialisation selon un mode de réalisation de la présente invention.

La figure 9 représente un schéma illustrant une phase d'accélération constante selon un mode de réalisation de la présente invention.

La figure 10 représente un schéma illustrant une phase de changement d'accélération selon un mode de réalisation de la présente invention.

La figure 11 représente un schéma illustrant un avantage apporté par la présente invention selon un mode de réalisation.

La figure 12 représente un schéma illustrant un avantage apporté par la présente invention selon un mode de réalisation.

La figure 13 représente un schéma illustrant un exemple d'application de la présente invention selon un mode de réalisation.

La figure 14 représente un schéma illustrant un exemple d'application de la présente invention selon un mode de réalisation.

La figure 15 représente un schéma illustrant un exemple d'application de la présente invention selon un mode de réalisation.

La figure 16 représente un schéma illustrant un exemple d'application de la présente invention selon un mode de réalisation.

La figure 17 représente un schéma illustrant une phase d'initialisation dans un exemple d'application de la présente invention selon un mode de réalisation.

La figure 18 représente un schéma illustrant une phase d'accélération constante dans un exemple d'application de la présente invention selon un mode de réalisation.

La figure 19a représente un tableau récapitulatif d'une partie au moins des étapes du procédé du côté du serveur informatique selon un mode de réalisation de la présente invention.

La figure 19b représente un tableau récapitulatif d'une partie au moins des étapes du procédé du côté du terminal selon un mode de réalisation de la présente invention.

La figure 19c représente la légende des figures 19a et 19b selon un mode de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions ne sont pas représentatives de la réalité.

## DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement.

Selon un mode de réalisation, l'utilisation par ledit terminal informatique de ladite donnée D comprend au moins une étape d'affichage de ladite donnée D, de préférence ledit terminal informatique comprenant au moins un dispositif d'affichage configuré pour afficher ladite donnée D.

Selon un mode de réalisation, l'utilisation par ledit terminal informatique de ladite donnée D comprend au moins une étape de mémorisation de ladite donnée D, de préférence ledit terminal informatique comprenant au moins un dispositif de mémorisation configuré pour mémoriser ladite donnée D, de préférence sur un support non transitoire.

Selon un mode de réalisation, l'utilisation par ledit terminal informatique de ladite donnée D comprend au moins une étape d'analyse de ladite donnée D, de préférence ledit terminal informatique comprenant au moins un dispositif d'analyse configuré pour analyser ladite donnée D.

On entend par terminal ou terminal informatique, un dispositif électronique, appelé également appareil électronique ou encore client. Ce terminal étant apte à recevoir les données transmises depuis par exemple un serveur informatique. Ce terminal peut ainsi comprendre l'un parmi : un dispositif d'affichage, un dispositif de mémorisation ou encore un dispositif d'analyse. Le terminal informatique est ainsi apte, de préférence et selon un mode de réalisation, à : afficher une donnée et/ou enregistrer une donnée et/ou analyser une donnée.

Selon un mode de réalisation, ladite donnée est prise parmi au moins : un pixel, un voxel, une valeur numérique, un objet, une image, ...

Selon un mode de réalisation, ledit au moins un premier attribut A est pris parmi au mois : une position, une vitesse, une accélération, une couleur prise dans une plage de couleurs, un coefficient de transparence, ...

Selon un mode de réalisation, le premier état, le deuxième état et le troisième état sont pris parmi au moins : une valeur numérique, des coordonnées spatiales, un vecteur vitesse, un vecteur d'accélération, une couleur prise parmi une plage de couleurs, un coefficient de transparence, ...

Selon un mode de réalisation, le paramètre d'évolution est pris parmi au moins : une vitesse, une accélération, une trajectoire, ...

Selon un mode de réalisation, le premier paramètre d'évolution $E(n)$ est égal à $(A(n+1)-A(n))/(T(n+1)-T(n))$, de préférence à la dérivée première de $(A(n+1)-A(n))/(T(n+1)-T(n))$ par rapport à T.

Selon un mode de réalisation, le deuxième état $A(n+1)$ est égal à $E(n)*(T(n+1)-T(n))+A(n)$, de préférence à l'intégrale de $E(n)*(T(n+1)-T(n))+A(n)$, T allant de $T(n)$ à $T(n+1)$.

Selon un mode de réalisation, le troisième état $A(n+2)$ est égal à $E(n+1)*(T(n+2)-T(n+1))+A(n+1)$, de préférence à l'intégrale de $E(n+1)*(T(n+2)-T(n+1))+A(n+1)$, T allant de $T(n+1)$ à $T(n+2)$.

Selon un mode de réalisation, le premier paramètre d'évolution $E(n+1)$ est égal à $(A(n+2)-A(n+1))/(T(n+2)-T(n+1))$, de préférence à la dérivée première de $(A(n+2)-A(n+1))/(T(n+2)-T(n+1))$ par rapport à T.

Selon un mode de réalisation, le troisième état $A(n+2)$ est égal à $E(n)*(T(n+2)-T(n))+A(n)$, de préférence à l'intégrale de $E(n)*(T(n+2)-T(n))+A(n)$, T allant de $T(n)$ à $T(n+2)$.

Selon un mode de réalisation, le premier paramètre d'évolution $E(n+1)$ est égal à $(A(n+2)-A(n))/(T(n+2)-T(n))$, de préférence à la dérivée première de $(A(n+2)-A(n))/(T(n+2)-T(n))$ par rapport à T.

Selon un mode de réalisation, $A(n+1)$ est compris entre $A(n)$ et $A(n+2)$.

Selon un mode de réalisation, l'étape de réception par ledit terminal informatique de ladite donnée D1 depuis au moins un serveur informatique et l'étape de réception par ledit terminal informatique d'un premier état $A(n)$ dudit premier attribut A correspondant au premier temps $T(n)$ depuis au moins un serveur informatique sont réalisées en une seule et même étape.

Selon un mode de réalisation, la présente le procédé comprend une phase de resynchronisation comprenant au moins les étapes suivantes :

    i. Réception par ledit terminal informatique de ladite donnée D1 depuis au moins un serveur informatique ;

    ii. Réception par ledit terminal informatique d'un état $A(n+m)$ dudit premier attribut A correspondant à un temps $T(n+m)$ depuis au moins un serveur informatique ;

    iii. Utilisation par ledit terminal informatique 10 de ladite donnée D1 selon l'état $A(n+m)$ dudit premier attribut A au temps $T(n+m)$;

    iv. Réception par ledit terminal informatique:

        ▪ d'un état $A(n+m+1)$ dudit premier attribut A correspondant à un temps $T(n+m+1)$ depuis au moins un serveur informatique,
        ▪ Puis, calcul par ledit terminal informatique d'un paramètre d'évolution $E(n+m)$ dudit premier attribut A en fonction de $A(n+m)$ et de $A(n+m+1)$ ;

        -   ou,

        ▪ d'un paramètre d'évolution $E(n+m)$ dudit premier attribut A depuis au moins un serveur informatique,
        ▪ Puis, calcul par ledit terminal informatique de l'état $A(n+m+1)$ en fonction de $A(n+m)$ et de $E(n+m)$.

Selon un mode de réalisation, le procédé comprend une phase de compression d'une pluralité de données comprenant au moins les étapes suivantes :

    i. Au moins une sous-phase d'initialisation comprenant :

        a. Un enregistrement, sur au moins une mémoire, d'une première valeur correspondant à la première valeur de la pluralité de données,
        b. Un enregistrement, sur au moins une mémoire, d'une deuxième valeur correspondant à l'accélération de la seconde valeur de la pluralité de données,

ii. Au moins une sous-phase à accélération constante comprenant :

a. Un suivi de la valeur de ladite accélération ou de sa variation,
b. Un suivi d'un nombre qui représente le nombre de positions pendant laquelle ladite accélération reste constante, le nombre de positions correspondant au nombre de données consécutives de la pluralité de données ayant une accélération constante.
c. Un enregistrement, sur au moins une mémoire, d'une troisième valeur correspondant audit nombre de positions pendant laquelle l'accélération reste constante.

iii. Au moins une phase de changement d'accélération comprenant :

a. Un suivi de la valeur de la nouvelle accélération ou de sa variation
b. La valeur suivante est égale à la nouvelle accélération ou sa variation par rapport à la précédente valeur d'accélération,
c. Un enregistrement, sur au moins une mémoire, d'une quatrième valeur correspondant à ladite nouvelle accélération.

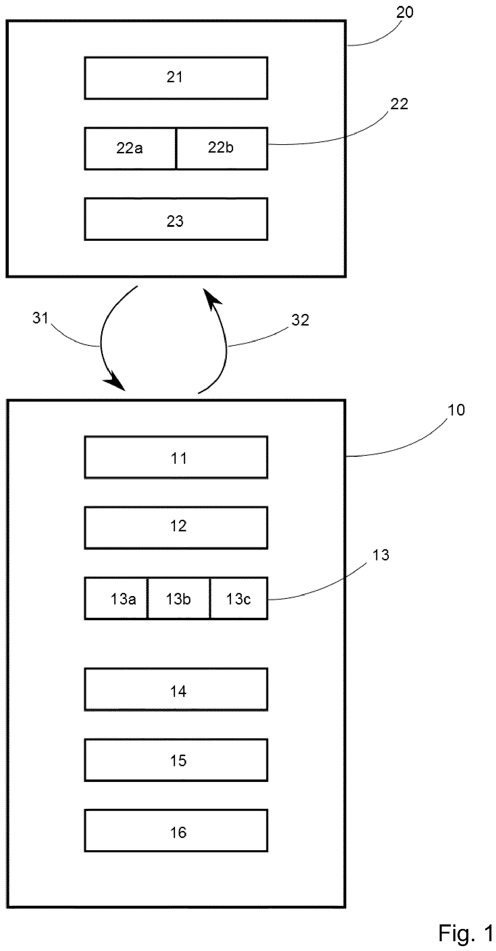

Dans un système classique tel que représenté en figure 1, utilisant un terminal informatique 10, par exemple un téléphone intelligent, le système d'exploitation 13a et les applications 13b sont installés, souvent à partir d'une copie téléchargée depuis au moins un serveur informatique 20 via un réseau de communication comme par exemple l'Internet, et sont exécutés en local sur le terminal informatique 10 au moyen de son processeur 12.

Ce terminal informatique 10, issu de l'art antérieur, comprend un dispositif d'affichage 11, un processeur 12, une mémoire 13 stockant entre autres le système d'exploitation 13a, les applications 13b, et les données personnelles 13c de l'utilisateur par exemple. Ce terminal informatique 10 dispose également d'une batterie 14, d'une interface utilisateur 16 et d'un module de communication 15, en particulier pour émettre 32 et recevoir 31 des données vers et depuis au moins un serveur informatique 20.

On entend par dispositif d'affichage tout dispositif apte à afficher d'une manière ou d'une autre une donnée, de préférence un dispositif d'affichage au sens de la présente invention est un écran d'ordinateur, de télévision ou bien encore de téléphone intelligent autrement appelé smartphone.

Ce terminal informatique 10 est par exemple l'un parmi les terminaux suivants : téléphone mobile, tablette, ordinateur personnel, écran et décodeur de télévision, console de jeux, électronique de véhicule, écran de publicité.

Ce serveur informatique 20, issu lui aussi de l'art antérieur, comprend un processeur 21, une mémoire 22 hébergeant des fichiers d'installations 22a et des fichiers de mise à jour 22b, ces fichiers (22a, 22b) étant destinés à être télécharger depuis le serveur informatique 20 vers le terminal informatique 10 pour y être installés.

Ainsi, couramment, l'utilisateur va envoyer une requête de téléchargement d'un fichier d'installation 22a par exemple au serveur informatique 20, puis le terminal informatique 10 va télécharger ce fichier 22a, généralement représentant une quantité non négligeable de données et donc de charge pour la bande passante du réseau de communication du terminal informatique 10. De plus, le fichier 22a va alors être enregistré sur la mémoire 13 du terminal informatique 10 avant d'y être installé. Notons que toutes ces étapes requièrent également une quantité d'énergie à la batterie 14 non négligeable.

On comprend alors aisément que dans l'art antérieur, le réseau de communication est lourdement exploité, ainsi que l'espace mémoire du terminal informatique 10 ou encore la batterie 14 de celui-ci.

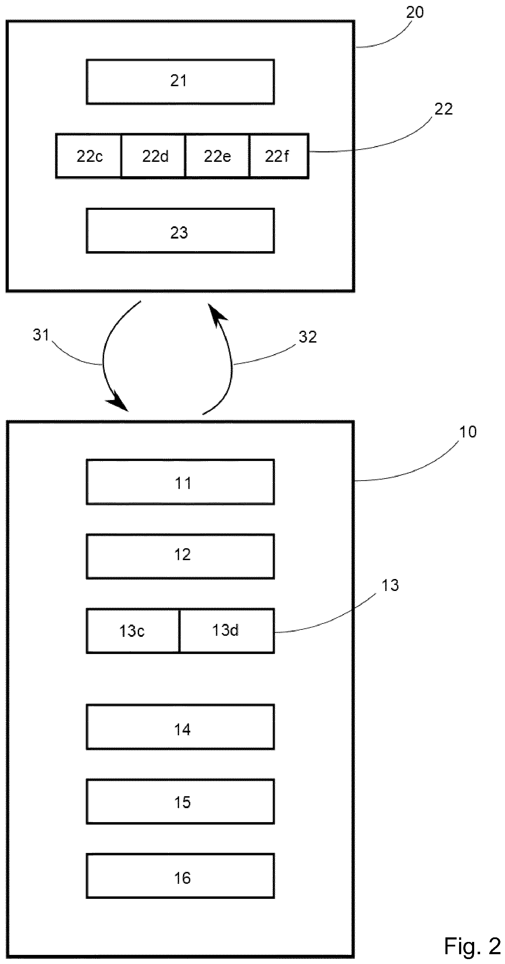

La figure 2 illustre un système selon un mode de réalisation de la présente invention.

Selon la présente invention, le terminal informatique 10 comprend sensiblement les mêmes éléments que précédemment à l'exception entre autres du système d'exploitation 13a et des applications 13b qui ne sont pas stockés dans la mémoire 14 du terminal informatique 10. En effet, la mémoire 14 du terminal informatique 10 comprend dès lors certaines données personnelles 13c de l'utilisateur et une partie client 13d du système. Cette partie client 13d est configurée pour communiquer au travers du module de communication 15 avec une partie serveur 22d du système hébergée par le serveur informatique 20. Ce serveur informatique 20 comprend d'ailleurs le système d'exploitation 22e du terminal informatique 10 ainsi que les diverses applications 22f du terminal informatique 10. On notera que le serveur informatique 20 peut ou non héberger des fichiers d'installation 22a ou de mise à jour 22b. Néanmoins, selon un mode de réalisation de la présente invention, la majeure partie de ces fichiers (22a, 22b) est destinée à être utilisée par le serveur informatique 20 lui-même et non à être téléchargé par le terminal informatique 10. Le réseau de communication entre le terminale informatique 10 et le serveur informatique 20 peut être de toute sorte. Il s'agit par exemple d'un réseau sans fil (habituellement qualifiée par le vocable anglais de wireless network) ou en partie au moins sans fil. Ainsi il peut par exemple comprendre une partie filaire et d'une partie sans fil. Alternativement il s'agit d'un un réseau filaire.

Ainsi, le serveur informatique 20 peut localement procéder à des mises à jour et à l'installation de nouvelles applications. Toutefois, il peut être envisagé un fichier d'installation téléchargeable par le terminal informatique 10 pour installer par exemple la partie client 13d du système ou procéder à sa mise à jour.

Ainsi, selon la présente invention, le serveur informatique 20 héberge et est capable d'exécuter un ou plusieurs Systèmes d'exploitation 22e dits virtualisés et une ou des applications 22f qui y sont installées. On notera que la présente invention permet l'utilisation de systèmes d'exploitation 22e ou encore d'applications 22f déjà existantes. Leurs mises en œuvre se faisant néanmoins en local sur le serveur informatique 20 et nullement sur le terminal informatique 10, contrairement à l'art antérieur.

Ainsi, les applications 22f installées sur le serveur informatique 20 accèdent aux divers éléments, modules, pilotes, du terminal informatique 10 et de ses interfaces, de préférence à travers des pilotes virtuels offrant grâce au Système d'exploitation 22e virtualisé les mêmes interfaces logicielles que celle du même Système d'exploitation 13a si celui-ci était installé en local sur le terminal informatique 10.

Ainsi, et de manière avantageuse, les applications 22f utilisées n'ont pas besoin d'être modifiées par rapport à celles développées pour les systèmes de l'art antérieur.

De préférence, l'accès aux pilotes des modules du terminal informatique 10 se fait grâce à un flux de Commandes et de Données transitant sur un réseau bidirectionnel (pouvant être Internet ou un réseau privé) ou unidirectionnel de communication (par exemple une transmission satellite, Câble, ou Terrestre).

Contrairement à l'art antérieur, le volume de données et de commandes transitant est très faible, car il ne s'agit pas d'applications entières, mais uniquement de commandes et de données basiques. La présente invention permet ainsi de réduire la bande passante nécessaire pour le fonctionnement du terminal informatique 10.

On notera que certaines solutions de virtualisation existent déjà, mais souffrent de nombreuses problématiques. En effet, couramment dans l'art antérieur, le serveur informatique 20 va faire fonctionner en local un système d'exploitation et des applications et va recevoir depuis le terminal informatique 10 des commandes, les exécuter, et transmettre au terminal informatique 10 le rendu graphique de ces commandes dans les applications fonctionnant dans le système d'exploitation virtualisé, cela revient à réaliser un envoi d'image, chaque image représentant l'affichage qu'aurait l'utilisateur si l'exploitation était faite sur son terminal informatique 10. Aussi, la quantité d'information est conséquente et requiert une bande passante suffisamment large.

De manière figurée, l'affichage du système d'exploitation virtualisé et des applications est déporté sur le terminal informatique 10 qui ne sert alors que pour l'envoi de commandes vers le serveur informatique 20 et pour l'affichage de données volumineuses transmises par le serveur informatique 20.

On trouve ainsi des solutions dites de streaming de jeux ou d'interfaces au format vidéo par VMware, Microsoft, NVIDIA, Gamefly et d'autres acteurs du marché.

Les techniques proposées s'appuient :

i. soit sur la transmission régulière d'images statiques avec des niveaux de compression et de perte de qualité tentant de s'adapter à la bande passante du réseau de communication,

ii. soit sur des systèmes qui assurent en continu le rendu des interfaces graphiques distantes sur le serveur informatique 20, puis l'encodent au format vidéo pour le transmettre au terminal informatique 10, ces systèmes étant ceux de plus en plus utilisés de nos jours. Ce sont ces systèmes qui sont utilisés par les solutions de jeux en streaming les plus reconnues.

Ces techniques expliquent d'une part la perte de qualité du rendu à distance dès lors que le réseau de communication n'est pas de très haut débit, mais également les latences observées, car elles ajoutent un étage complexe de traitement au niveau des serveurs informatiques qui doivent d'abord calculer un rendu graphique avant de le transmettre au format vidéo, puis un décodage vidéo sur le terminal informatique 10.

L'ensemble de ces techniques génère donc aussi des besoins de ressources informatiques et énergétiques, et des coûts sur les serveurs informatiques de plus en plus importants, puisqu'ils ont besoin à la fois des interfaces graphiques et d'encodeurs vidéo à faible latence.

Ici encore, contrairement à l'art antérieur, la présente invention, selon un mode de réalisation, ne transmet pas depuis le serveur informatique 20 vers le terminal informatique 10 des trames d'image ou de vidéo pour l'affichage de celles-ci sur le dispositif d'affichage 11 du terminal informatique 10.

Comme expliqué par la suite, la présente invention permet d'adapter les débits des flux de Commandes et de Données aux réseaux de communication grand public, et pas seulement à des réseaux de communication très haut débit et de très haute qualité de service.

Pour cela, l'invention propose notamment un nouveau procédé de transmission de données et de commandes.

En effet, selon la présente invention, le système demande une bande passante bien inférieure à celle nécessaire dans les solutions de l'art antérieur. La présente invention peut fonctioner de façon performante tout en offrant une très faible latence, voire une absence de latence, et une qualité de rendu identique à celle proposée par les systèmes actuels les plus performants, tout en utilisant une bande passante plus réduite.

Pour permettre cela, la présente invention concerne un procédé de transmission de données entre le serveur informatique 20 et le terminal informatique 10. Ce procédé est applicable pour la transmission de données du terminal informatique 10 vers le serveur informatique 20 et du serveur informatique 20 vers le terminal informatique 10, et plus généralement entre des appareils électroniques selon les applications mises en œuvre utilisant la présente invention.

De manière avantageuse, le démarrage de la partie client 13d du système sur le terminal informatique 10, puis l'utilisation à distance du système d'exploitation 22e et des applications 22f hébergés par le serveur informatique 20 génère différents flux de commandes et de données entre serveur informatique 20 et terminal informatique 10 dont le débit est maîtrisé et optimisé.

Certaines parties de ce flux de commandes et de données sont déjà adaptées aux capacités des réseaux de communication actuels grand public :

i. Echanges d'initialisation entre la partie client 13d et la partie serveur 22d du serveur informatique 20 au démarrage de la partie client 13d ou de la partie serveur 22d : ce besoin en bande passante est faible, il est similaire à celui couramment utilisé pour les systèmes client-serveur existants (connexion, identification ou authentification, paramétrages),

ii. Consommation à distance ou transferts de Vidéo, d'Audio ou de Photos ou images : ce besoin en bande passante est aujourd'hui accessible sur les réseaux de communication grand public,

iii. Interactions avec les interfaces claviers, écrans tactiles, capteurs, lecteurs de cartes et empreintes, GPS à titre d'exemples non exhaustifs (interactions de l'utilisateur ou de l'environnement avec les applications) : ces interfaces ont généralement besoin d'une bande passante relativement faible.

Cependant, une partie de ce flux tel qu'il est présenté dans l'art antérieur n'est pas forcément adaptée :

i. L'accès aux interfaces interactives à distance des applications oblige le serveur informatique 20 à transmettre un flux dédié à l'affichage graphique de ces interfaces interactives par le pilote dédié à l'affichage graphique du terminal informatique 10 (selon le client il peut s'agir aujourd'hui de OpenGL ES, Open GL, Direct3D ou Vulkan à titre d'exemples non exhaustif). Ce flux peut devenir important pendant l'utilisation de certaines applications 22f riches d'objets et d'animations, dû au flux de commandes et de données nécessaire devenant important : plusieurs dizaines à centaines de Mb/s transitent entre l'application 22f et le pilote d'affichage graphique dans certains cas comme par exemple lors de l'accès à des applications de jeux vidéo modernes.

Le procédé de transmission selon la présente invention contribue à la diminution de ce besoin important en bande passante.

Afin d'adapter la bande passante nécessaire au flux, c'est-à-dire afin d'adapter le débit du flux, entre le serveur informatique 20 et le terminal informatique 10 généré par l'interface interactive des applications 22f à distance à destination des pilotes d'interfaces graphiques du terminal informatique 10, il est nécessaire d'utiliser un nouveau procédé de transmission, voire également de compression, ce nouveau procédé de transmission comprend, selon un mode de réalisation, l'utilisation de variations d'accélération des valeurs des données à transmettre permettant d'afficher cette interface interactive.

En effet, les interfaces interactives ont généralement des mouvements uniformes en 2 ou 3 dimensions spatiales, un bon niveau de fluidité étant généralement souhaité par l'utilisateur, et les valeurs des données qui les caractérisent ont généralement des variations uniformément accélérées. Ces valeurs ont donc une accélération souvent constante, sauf lors des changements de trajectoire.

Plus précisément, transmettre à période régulière T une information donnant les variations d'accélération des valeurs de chacune des données plutôt que l'ensemble de leurs valeurs exactes à tout instant T(n) (comme le pratiquent les applications des appareils actuels avec les systèmes d'exploitations13a internes, c'est-à-dire installés en local sur le terminal utilisateur 10) permet de diminuer le volume des commandes envoyées, et même permet au terminal informatique 10 d'afficher un état prédictif avant de recevoir les commandes et les données de l'instant T(n+1) qui arrivent toujours un temps de transmission plus tard.

Pour cela le module du serveur informatique 20 dédié à transmettre les commandes de pilotage de l'affichage graphique des applications doit les traiter à tout instant T(n) pour en déduire les variations des accélérations instantanées des valeurs des différentes données (positions d'objets à 1,2 ou 3 dimensions spatiales, transparence, luminosité, texture de remplissage, etc.) et transmettre au plus vite cette information au terminal informatique 10, qui peut alors facilement les interpréter et recalculer les valeurs exactes des données de l'instant T(n), et en cas d'accélération constante prédire les valeurs probables de l'instant T(n+1)).

La présente invention concerne ainsi un procédé de transmission de données qui réduit le nombre de données à transmettre sans créer de pertes sur leurs valeurs et qui réduit ou annule la perception de latence grâce à sa capacité prédictive.

Concernant la description de ce procédé par la suite, nous allons introduire une série de définitions de plusieurs variables :

i. D est une donnée. Il peut s'agir d'un objet, d'une position, d'une coordonnée, d'un pixel, d'un voxel, ou plus généralement de tout type de données.

ii. A est un attribut de la donnée D. Par exemple, il peut s'agir d'une coordonnée spatiale, temporelle, d'une position, d'une couleur prise parmi une plage de couleurs, d'une transparence, d'une vitesse de déplacement, d'une accélération ou plus généralement de tout type d'attribut qu'une donnée peut comprendre. On notera qu'une donnée D peut avoir plusieurs attributs, un premier, un deuxième, etc... Le premier pouvant par exemple non limitatif être une accélération et la deuxième une couleur.

iii. $T(n)$ est le n-ième instant. On notera $T = T(n+1) - T(n)$ comme étant la période d'envoi des données depuis le serveur informatique 20 vers le terminal informatique 10, en particulier vers la partie client 13d, (par exemple 20ms dans le cas d'un rendu fluide à 50 images par secondes, nommé en général 50fps pour 50 frames per second), elle est définie par le serveur informatique 20 et sera prise en compte par le terminal informatique 10 qui attendra de nouvelles données tous les T périodes par exemple.

iv. $T0$, $T(n)$, $T(n)$, $T(n+1)$ : correspondent aux instants 0, 1, n, n+1, de telle sorte qu'il s'écoule T entre 2 instants consécutifs,

v. $A(n)$ est un état précis de l'attribut A à l'instant $T(n)$. $A(n)$ peut par exemple être une position précise, une coordonnée précise, une couleur précise prise parmi une plage de couleurs, un coefficient de transparence précis, plus généralement une valeur précise parmi toute valeur que peut prendre l'attribut A.

vi. $E(n)$ correspond à un paramètre d'évolution de l'état $A(n)$ vers l'état $A(n+1)$. $E(n)$ est par exemple une loi d'évolution pouvant être linéaire, exponentielle ou quelconque. $E(n)$ correspond à une règle d'évolution de l'attribut A depuis l'état $A(n)$ vers l'état $A(n+1)$.

vii. x correspond à une donnée à 1 dimension dont la valeur évolue dans le temps et dont les variations sont à transmettre depuis le serveur informatique 20 vers le terminal informatique 10, de préférence à la partie client 13d,

viii. $x(0)$, $x(1)$, $x(n)$, $x(n+1)$ : correspondent aux valeurs de x aux débuts des instants $T(0)$, $T(1)$, $T(n)$, $T(n+1)$, de telle sorte qu'il s'écoule $T(n+1) - T(n)$ entre 2 valeurs consécutives de x,

ix. $v(0)$, $v(1)$, $v(n)$, $v(n+1)$ : correspondent aux vitesses de la variation de la valeur x aux débuts des instants $T(0)$, $T(1)$, $T(n)$, $T(n+1)$, de telle sorte qu'il s'écoule $T(n+1) - T(n)$ entre 2 valeurs consécutives de v,

x. $a(0)$, $a(n)$, $a(n)$, $a(n+1)$ : correspondent aux accélérations de la variation de la valeur de x aux débuts des instants $T(0)$, $T(1)$, $T(n)$, $T(n+1)$, de telle sorte qu'il s'écoule $T(n+1) - T(n)$ entre 2 valeurs consécutives de l'accélération,

xi. $xp(n+1)$, $vp(n+1)$ et $ap(n+1)$ : correspondent à l'instant $T(n)$ aux valeurs prédictives de $x(n+1)$, $v(n+1)$ et $a(n+1)$ de l'instant $T(n+1)$,

xii. $xc(n+1)$, $xc(n+1)$ et $ac(n+1)$ : correspondent à l'instant $T(n+1)$ aux valeurs calculées (ou corrigées) de $x(n+1)$, $v(n+1)$ et $a(n+1)$ de l'instant $T(n+1)$,

xiii. A l'instant $T(0)$, on considère que $v(0)$ et $a(0)$ sont nuls.

Dans le cas où les données sont à 2 ou 3 dimensions comme une position de coordonnées x, y, z, ce procédé s'applique aussi bien à x, qu'à y et qu'à z. En effet, on appliquera le même raisonnement que celui utilisé pour x à y et z.

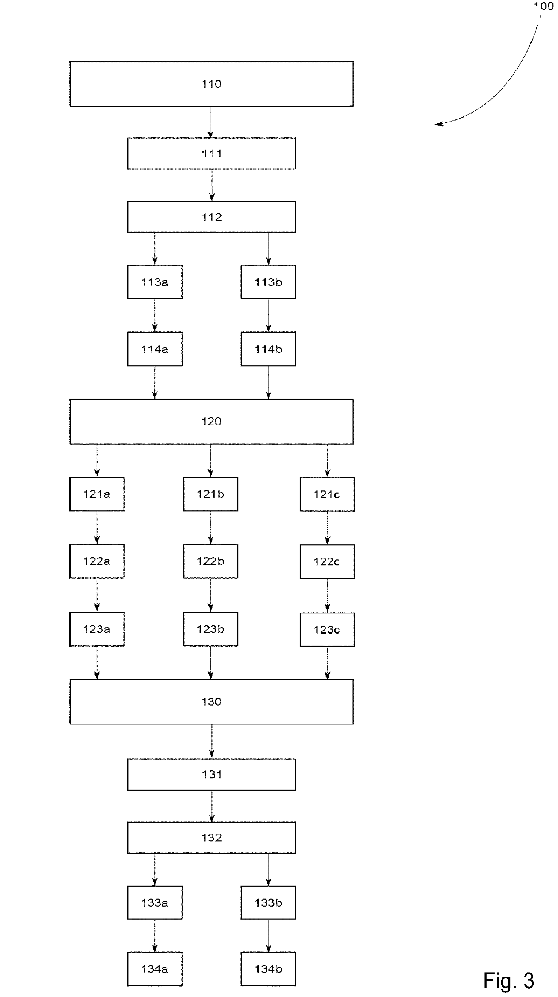

La figure 3 représente un algorithme présentant les différentes étapes mises en œuvre par la présente invention.

Ainsi le procédé de transmission 100, selon un mode de réalisation de la présente invention comprend au moins deux phases et de préférence au moins trois phases :

i. Une phase d'initialisation 110 ;
ii. Une phase d'évolution 120 ;
iii. Une phase optionnelle de resynchronisation 130.

De manière avantageuse, la phase d'initialisation 110 permet d'identifier la donnée D à l'instant $T(0)$ avec son attribut A et son état $A(0)$.

Avantageusement, la phase d'évolution 120 permet de définir comment l'état $A(0)$ de l'attribut A de la donnée D va évoluer vers $A(1)$ par exemple.

De préférence la phase de resynchronisation 130 permet, en cas d'interruption accidentelle de la communication entre le terminal informatique 10 et le serveur informatique 20, de poursuivre le procédé de la présente invention en resynchronisant la donnée D avec son attribut A dans l'état $A(n)$ à l'instant $T(n)$.

Selon un mode de réalisation, la phase d'initialisation 110 comprend au moins les étapes suivantes :

i. Réception 111 par le terminal informatique 10 d'une donnée D depuis le serveur informatique 20 ;

ii. Réception 111 par le terminal informatique 10 d'un premier état A(n) d'un premier attribut A de la donnée D correspondant à un premier temps T(n) depuis le serveur informatique 20 ;

iii. Utilisation 112, par exemple affichage sur le dispositif d'affichage 11, par le terminal informatique 10 de la donnée D selon le premier état A(n) du premier attribut A au premier temps T(n);

iv. Puis, réception par le terminal informatique 10 :

- 113a d'un deuxième état A(n+1) du premier attribut A correspondant à un deuxième temps T(n+1) depuis le serveur informatique 20,
- Puis, calcul 114a par le terminal informatique 10 d'un premier paramètre d'évolution E(n) du premier attribut A en fonction de A(n) et de A(n+1) ;

- ou,

- 113b d'un premier paramètre d'évolution E(n) du premier attribut A depuis le serveur informatique 20,
- Puis, calcul 114b par le terminal informatique 10 d'un deuxième état A(n+1) en fonction de A(n) et de E(n).

On notera que la phase d'initialisation 110 comprend deux branches possibles. En effet, dans un cas le terminal informatique 10 peut recevoir 111 et 113a un premier état A(n) de l'attribut A et un deuxième état A(n+1) de l'attribut A, puis calculer 114a automatiquement le paramètre d'évolution E(n) permettant à l'attribut A de passer de A(n) à A(n+1) pendant un temps T(n+1)-T(n). Dans ce cas, c'est le terminal informatique 10 qui en local va procéder par exemple à l'affichage de l'évolution de la donnée D entre A(n) et A(n+1) sans recevoir d'autres informations du serveur informatique 20.

Dans un autre cas, le terminal informatique 10 peut recevoir 113b un premier état A(n) de l'attribut A et un paramètre d'évolution E(n). Ainsi, le deuxième état A(n+1) sera calculé 114b par le terminal informatique 10 en local en appliquant le paramètre d'évolution E(n) au premier état A(n) sur une période T(n+1)-T(n). Dans ce cas encore, le terminal informatique 10 ne reçoit aucune autre information du serveur informatique 20 en dehors d'une situation initiale A(n) et d'un paramètre dévolution de ladite situation E(n) sur la période T = T(n+1)-T(n).

Selon un mode de réalisation, la donnée D peut comprendre un premier attribut A et un deuxième attribut B, par exemple non limitatif, si la donnée D est un pixel, le premier attribut A peut être la position spatiale dudit pixel D et le deuxième attribut B peut être la couleur dudit pixel D. On notera qu'une couleur peut être comprise entre deux autres couleurs, par exemple dans un flux temporel, une couleurs peut varier et ainsi à l'instant T compris entre T-1 et T+1, la couleur peut être différente de celle à l'instant T-1 et de celle à l'instant T+1. De plus, une couleur peut être codée numériquement et par exemple sur une ou plusieurs échelles numériques. Une couleur peut dès lors être située entre deux autres couleurs selon cette ou ces échelles numériques. Enfin, une couleur peut également être disposée dans une plage de couleurs comme par exemple une plage de couleurs classées selon leur fréquence ou bien encore leur longueur d'onde optique. Ainsi, par exemple, une première couleur comprise entre une deuxième et une troisième couleurs peut signifier que la longueur d'onde de la première couleur est comprise entre la longueur d'onde de la deuxième couleur et la longueur d'onde de la troisième couleur.

Selon un mode de réalisation, la phase d'initialisation 110 peut être représentée par exemple comme suit pour la branche comprenant la réception 113a du paramètre d'évolution E(n) :

i. Au tout début de l'utilisation d'une application distante, à l'instant T(0) :

a. x est à la valeur x0, comme une application 22f l'a décidé sur le serveur informatique 20 par exemple,
b. l'accélération a(0) de x(0) ne peut être calculée et est considérée nulle,
c. la vitesse de variation de x appelée v(0) est considérée nulle,
d. le serveur informatique 20 transmet au terminal informatique 10 la valeur réelle de x soit x(0),
e. le terminal informatique 10 reçoit la valeur x(0) un instant de transmission plus tard,
f. le terminal informatique 10 utilise la valeur x(0), par exemple il affiche le point x à la coordonnée x(0) via le dispositif d'affichage 11,

ii. A l'instant suivant T(1) :

a. La valeur de x est x(1), comme l'application 22f l'a décidé sur le serveur informatique 20,
b. Du côté du serveur informatique 20, il peut être calculé une vitesse v(1) qui est égale à (x(1)-x(0))/(T(0)-(T1)),
c. Du côté du serveur informatique 20, il peut être également calculé une accélération a(1) qui est égale à (v(1)-v(0))/(T(0)-(T1)),
d. Le serveur informatique 20 transmet la valeur a(1) au terminal informatique 10,
e. Le terminal informatique 10 reçoit la valeur a(1) un instant de transmission plus tard,

f. Le terminal informatique 10 peut calculer la valeur de x(1) = x(0) + 1/2.a(1)*T^2

g. Le terminal informatique 10 utilise la valeur x(1), par exemple pour afficher le point x à la coordonnée x(1), via par exemple le dispositif d'affichage 11.

Cette phase d'initialisation 110 permet ainsi au terminal informatique 10 de recevoir une donnée D ayant un attribut A dans un état A(0) et de pouvoir afficher son évolution vers A(1) sans recevoir en continu un état de A mais simplement en connaissant ou en déduisant son paramètre d'évolution E(1).

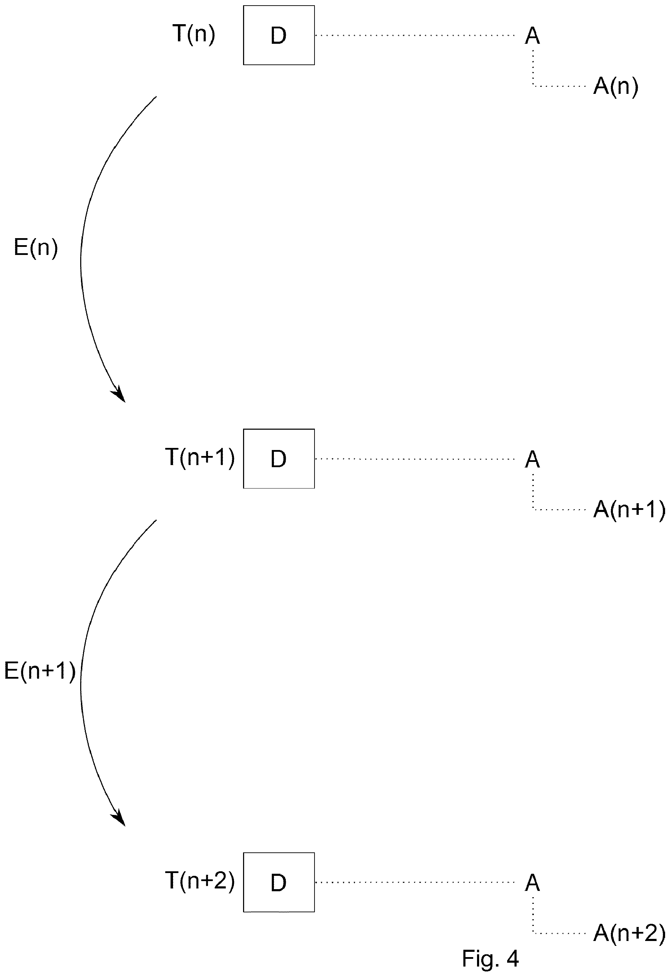

Ainsi, la figure 4 illustre parfaitement cette notion d'évolution de l'état d'un attribut. En effet sur cette figure, à l'instant T(n), la donnée D présente un attribut A dans l'état A(n).

En appliquant le paramètre d'évolution E(n) reçu par le terminal informatique 10 depuis le serveur informatique ou calculé par le terminal informatique 10 sur la base de A(n) et A(n+1), à l'instant T(n+1), le terminal informatique 10 connaît l'état A(n+1) de l'attribut A de la donnée D et l'évolution suivie par cet état entre l'instant T(n) et l'instant T(n+1).

Puis, de la même manière la donnée D voit son attribut A passer de l'état A(n+1) à A(n+2) selon le paramètre d'évolution E(n+1) à l'instant T(n+2).

Selon un mode de réalisation, la phase d'évolution 120 comprend au moins les étapes suivantes :

- Utilisation 121a, par exemple affichage sur le dispositif d'affichage 11, par le terminal informatique 10 de la donnée D selon le deuxième état A(n+1) du premier attribut A au deuxième temps T(n+1) ;
- Puis, calcul 122a par le terminal informatique 10 d'un troisième état A(n+2) du premier attribut A correspondant à un troisième temps T(n+3) en fonction de A(n) et/ou A(n+1) et de E(n) ;
- Puis, utilisation 123a, par exemple affichage sur le dispositif d'affichage 11, par le terminal informatique 10 de la donnée D selon le troisième état A(n+2) du premier attribut A au troisième temps T(n+2).

- Ou, de préférence,

- Réception 121b par le terminal informatique 10 d'un deuxième paramètre d'évolution E(n+1) du premier attribut A depuis le serveur informatique 20, E(n+1) étant différent de E(n) ;
- Puis, calcul 122b par le terminal informatique 10 d'un troisième état A(n+2) du premier attribut A correspondant à un troisième temps T(n+2) en fonction de A(n) et/ou A(n+1) et de E(n+1) ;
- Puis, utilisation 123b, par exemple affichage sur le dispositif d'affichage 11, par le terminal informatique 10 de la donnée D selon le troisième état A(n+2) du premier attribut A au troisième temps T(n+2) ;

- Ou, de préférence,

- Réception 121c par ledit terminal informatique d'un troisième état A(n+2) dudit premier attribut A au troisième temps T(n+2) depuis au moins un serveur informatique 20, A(n+2) étant différent de A(n+1) ;
- Puis, utilisation 121c par ledit terminal informatique 10 de ladite donnée D selon le troisième état A(n+2) dudit premier attribut A au troisième temps T(n+2).
- Puis, de préférence, calcul 122c par ledit terminal informatique 10 d'un troisième paramètre d'évolution E(n+1) dudit premier attribut A en fonction de A(n+1) et A(n+2) ;
- Puis, de préférence, calcul 122c par ledit terminal informatique 10 du quatrième état A(n+3) dudit premier attribut A au quatrième temps T(n+3) en fonction de A(n+2) et de E(n+1)
- Puis, de préférence, utilisation 123c par ledit terminal informatique 10 de ladite donnée D selon le quatrième état A(n+3) dudit premier attribut A au quatrième temps T(n+3).

Cette phase d'évolution 120 comprend au moins deux branches et avantageusement trois branches. La première branche correspond à une évolution constante de l'état A(n+1) selon le paramètre d'évolution E(n), la deuxième branche correspond à une modification du paramètre d'évolution E(n) de l'état A(n+1), et la troisième branche correspond à une modification du paramètre d'évolution E(n) suite à la réception d'un nouvel état A(n+2)

Selon un mode de réalisation, ladite première branche peut être représentée, par exemple, comme suit lorsqu'une phase d'évolution constante, également appelée d'accélération constante, se présente :

i. Cette phase est courante en cas de variations uniformément accélérées, l'accélération a(n) à l'instant T(n) sera identique à l'accélération a(n-1) à l'instant T(n-1),

ii. A l'instant T(n) :

a. La valeur de x est x(n), comme l'application 22f l'a décidé sur le serveur informatique 20,

b. Du côté du serveur informatique 20, il est calculé grâce aux précédentes valeurs dont x(n-1) une accélération a(n) qui est égale à a(n)=v(n)-v(n-1)/(T(n)-T(n-1)), avec v(n) =(x(n)-x(n-1))/(T(n)-T(n-1)),

c. Dans cette phase, le serveur informatique 20 voit que a(n) est égale à a(n-1) précédemment transmise à l'instant T(n-1) au terminal informatique 10,

d. Le serveur informatique 20 ne transmet pas la valeur a(n) au terminal informatique 10,

e. Au même instant T(n), le terminal informatique 10 suppose que a(n)=a(n-1),

f. Le terminal informatique 10 utilise pour x(n) : la valeur prédictive xp(n) avec xp(n)=xc(n-1)+vc(n-1)*(T(n-1) - T(n))+1/2.ap(n)*T^2 où ap(n) = ac(n-1).

g. a(n-1) est la dernière valeur connue de l'accélération de x par le terminal informatique 10, qui pouvait soit être une valeur corrective ac(n-1) reçue depuis le serveur informatique 20, soit une valeur prédictive ap(n-1) selon cette phase à T(n-1).

h. Le terminal informatique 10 ne reçoit finalement pas de nouvelle valeur de a(n) puisque non transmise, puisque constante.

i. La nouvelle valeur prédictive ap(n+1) devient ap(n) qui est égale à a(n) et a(n-1) dans cette phase.

Cela permet de calculer et d'utiliser à l'instant T(n+1) la valeur prédictive xp(n+1) comme fait avec xp(n), qui n'a pas été transmise par le serveur informatique 20 non plus.

On aura aussi xp(n+1) = x(n+1).

La présente invention permet ainsi de réduire la quantité d'informations transmise au strict minimum, c'est-à-dire un point de départ et un point d'arrivée, ou bien un point de départ et un vecteur d'accélération.

Généralement, l'art antérieur propose soit de transmettre une grande quantité d'informations depuis le serveur informatique 20, soit de réaliser l'ensemble des calculs en local en hébergeant sur le terminal informatique 10 le système d'exploitation 13a et les applications 13b. La présente invention tire avantage du meilleur des deux mondes. D'une part elle permet une virtualisation des applications 22f et des systèmes d'exploitation 22e avec une transmission d'informations réduite et optimisée et avec la réalisation d'une partie du calcul en local sur le terminal informatique 10 afin de réduire la bande passante nécessaire tout en bénéficiant d'une technologie de virtualisation.

Selon un mode de réalisation, la deuxième branche peut être représentée par exemple comme suit lorsqu'une phase d'évolution non constante se présente :

i. Pendant cette phase, les nouvelles valeurs d'accélération de x doivent être transmises au terminal informatique 10 pour qu'il puisse en déduire les nouvelles valeurs de x.

ii. A l'instant T(n) :

a. Nous sommes dans le cas où l'accélération de x est différente de l'accélération de x à l'instant T(n-1),

b. La valeur de x est x(n), comme l'application l'a à présent décidé sur le serveur informatique 20,

c. Du côté du serveur informatique 20, il est calculé une accélération a(n) qui est égale à a(n)=v(n)-v(n-1)/((T(n) - T(n-1)))^2 avec v(n) qui a pu être calculée par v(n)=(x(n)-x(n-1))/(T(n) - T(n-1))),

d. Dans cette phase, le serveur informatique 20 voit que a(n) est différent de a(n-1),

e. Le serveur informatique 20 transmet la valeur a(n) à l'instant T(n) au terminal informatique 10,

f. Au même instant T(n), le terminal informatique 10 n'a pas encore reçu la valeur a(n), il suppose que a(n)=a(n-1) et utilise pour x la valeur prédictive xp(n) avec xp(n)=xc(n-1)+vc(n-1)*(T(n) - T(n-1))+1/2.ap(n)*(T(n) - T(n-1))^2 avec ap(n) = ap(n-1) et ac(n-1).

g. a(n-1) est la dernière valeur connue de l'accélération de x par le terminal informatique 10 et qui pouvait soit être une valeur a(n-1) reçue depuis le serveur informatique 20, soit une valeur prédictive ap(n-1) selon cette phase à T(n-1).

h. Un instant de transmission plus tard, le terminal informatique 10 reçoit la valeur a(n) qui est finalement différente de a(n-1) dans le cas de cette phase, et le terminal informatique 10 calcule alors la nouvelle véritable valeur de x avec xc(n)=xc(n-1)+vc(n-1)*(T(n) - T(n-1))+1/2.a(n)*(T(n) - T(n-1))^2

i. Le terminal informatique 10 corrige alors la valeur prédictive utilisée xp(n) par la valeur xc(n) qui est égale à x(n). La nouvelle valeur prédictive ap(n+1) devient a(n) pour calculer la valeur prédictive de x(n+1).

Selon un mode de réalisation, et de manière non limitative, la troisième branche peut être représentée par exemple comme suit lorsqu'une phase d'évolution non constante se présente :

i. Pendant cette phase, les nouvelles valeurs de x sont transmises au terminal informatique 10 pour qu'il puisse en déduire la nouvelle valeur de l'accélération a(n+1) de x à l'instant T(n+1).

ii. A l'instant T(n) :

a. Nous sommes dans le cas où la prochaine valeur x(n+1) de x à l'instant T(n+1) est transmise depuis le serveur informatique 20 vers le terminal informatique 10,

b. A l'instant T(n), la valeur de x est x(n),

c. Du côté du serveur informatique 20, il est transmis une valeur x(n+1) correspondant à la valeur de x à l'instant T(n+1),

d. Dans cette phase, le terminal informatique 10 calcul alors une nouvelle accélération a(n+1) correspondant à l'accélération de x entre x(n) à l'instant T(n) et x(n+1) à l'instant T(n+1),

e. L'accélération a(n+1) est égale à a(n+1)=v(n+1)-v(n)/((T(n+1) - T(n)))^2 avec v(n+1) qui a pu être calculée par v(n+1)=(x(n+1)-x(n))/(T(n+1) - T(n))),

f. Ensuite, avec cette nouvelle accélération calculée, le terminal informatique 10 peut calculer la prochaine valeur de x, c'est-à-dire xp(n+2) à l'instant T(n+2), avec xp(n+2) =x(n+1)+v(n+1)*(T(n+1) - T(n+2))+1/2.ap(n+1)*T^2 où ap(n+1) = a(n+1).

Cette troisième branche correspond ainsi à la réception d'un nouvel état de l'attribut A et par le calcul d'un nouveau paramètre d'évolution E permettant d'atteindre ledit nouvel état. Ce nouveau paramètre d'évolution permet ensuite de déterminer les autres prochains états sauf réception d'un nouvel état ou d'un nouveau paramètre d'évolution par le terminal informatique 10.

Ici encore, la présente invention permet de limiter la quantité d'information transmise de sorte à réduire le débit du flux de commande et de données entre le terminal informatique 10 et le serveur informatique 20 tout en conservant un haut rendu graphique et une très basse latence, voire aucune latence.

Selon un mode de réalisation, lorsque la communication entre le terminal informatique 10 et le serveur informatique 20 est interrompue par accident, par exemple, une phase de resynchronisation 130 est mise en œuvre. De préférence, cette phase de resynchronisation 130 comprend au moins les étapes suivantes :

i. Réception 131 par le terminal informatique 10 de la donnée D1 depuis le serveur informatique 20 ;

ii. Réception 131 par le terminal informatique 10 d'un état A(n+m) dudit premier attribut A correspondant à un temps T(n+m) depuis le serveur informatique 20 ;

iii. Utilisation 132, par exemple affichage sur le dispositif d'affichage 11, par le terminal informatique 10 de la donnée D1 selon l'état A(n+m) du premier attribut A au temps T(n+m);

iv. Réception par le terminal informatique 10 :

- 133a d'un état A(n+m+1) du premier attribut A correspondant à un temps T(n+m+1) depuis le serveur informatique 20,
- Puis, calcul 134a par le terminal informatique 10 d'un paramètre d'évolution E(n+m) du premier attribut A en fonction de A(n+m) et de A(n+m+1) ;

- ou,

- 133b d'un paramètre d'évolution E(n+m) du premier attribut A depuis le serveur informatique 20,
- Puis, calcul 134b par le terminal informatique 10 de l'état A(n+m+1) en fonction de A(n+m) et de E(n+m).

Cette phase de resynchronisation 130 s'inspire de la phase d'initialisation 110 afin de réinitialiser l'état de l'attribut A de la donnée D lorsqu'une interruption entre le terminal informatique 10 et le serveur informatique 20 a eu lieu.

Selon un mode de réalisation, la phase de resynchronisation 130 peut être représentée comme suit :

i. Cette phase 130 est nécessaire lorsque l'on détecte une perte de connexion et/ou de réception de plusieurs instants consécutifs selon la qualité de service désirée ;

ii. Cette phase 130 est nécessaire lorsque la partie client 13d utilise des valeurs prédictives pendant de longs instants, ou périodes consécutives, de telle sorte que la précision de la nouvelle valeur prédictive ne devient pas acceptable, par exemple si la précision utilisée pour l'accélération transmise peut générer une erreur supérieure à une valeur prédéfinie ;

iii. Cette phase 130 est sensiblement identique à une phase d'initialisation 110 :

a. Le serveur informatique 20 transmet la valeur x(n) à un instant T(n),

b. Le serveur informatique 20 transmet la valeur a(n+1) à l'instant T(n+1).

De manière avantageuse, dans le cas où le terminal informatique 10 interagit avec le serveur informatique 20, il est possible d'utiliser le même procédé de transmission dans le sens terminal informatique 10 vers serveur informatique 20 que dans le sens serveur informatique 20 vers terminal informatique 10, par exemple dans le cas de la transmission des données de pilotage de l'interface graphique d'une application utilisée à distance via un smartphone, correspondant aux mouvements des doigts de l'utilisateur qui se déplacent sur l'écran tactile.

En effet, de manière non limitative, et à titre d'exemple, le terminal informatique 10 peut être pris parmi au moins : un téléphone intelligent dit smartphone, un ordinateur fixe ou portable, une montre connectée ou plus généralement tout dispositif informatique.

De manière avantageuse, et selon un mode de réalisation, le terminal informatique 10 ne sachant pas à l'avance qu'il va y avoir un changement d'accélération, il considère qu'il est dans une phase d'accélération constante, car c'est la plus courante lors de variations uniformément accélérées.

De préférence, lorsque le terminal informatique 10 ne reçoit pas de données depuis le serveur informatique 20 pendant un temps supérieur à T = T(n) - T(n+1) depuis la dernière valeur reçue ou prédite à l'instant T(n), il utilise la valeur prédictive xp(n+1) dès le début de l'instant T(n+1) définie par la phase d'accélération constante précédemment décrite.

De préférence, lorsque le terminal informatique 10 reçoit une nouvelle valeur d'accélération pendant l'instant T(n+1), il utilise cette nouvelle valeur et remplace la valeur prédictive xp(n+1) par cette nouvelle valeur corrigée xc(n+1) définie par la phase d'évolution, appelée également phase de changement de l'accélération, précédemment décrite.

De manière avantageuse, dans le cas de données subissant des variations uniformément accélérées la plupart du temps, la présente invention se situera principalement dans des phases d'accélération constante la plupart du temps : le nombre de données à envoyer sera considérablement réduit (pas de nouvelle information à transmettre au terminal informatique 10 pendant les phases d'accélération constante).

C'est alors dans une phase de changement d'accélération 120 des variations des valeurs (correspondant à un changement de trajectoire quand il s'agit de coordonnées spatiales par exemple), ou des phases d'initialisation 110 ou de resynchronisation 130 (lors de gestion d'erreur ou de perte de connexion par exemple), qu'il faudra que le serveur informatique 20 transmette au terminal informatique 10 de nouvelles valeurs des données.

De plus, les variations d'accélération étant relativement faibles quand il s'agit de transmettre un modèle représentant le mouvement d'interfaces ou scènes graphiques de représentation numérique d'un monde réel ou avec lequel un utilisateur peut interagir, il pourra convenir de choisir de transmettre la variation de l'accélération entre T(n+1) et T(n), soit a(n+1)-a(n-1) plutôt que a(n+1) pour réduire encore la quantité d'informations transmises et ainsi la bande passante exploitée entre le terminal informatique 10 et le serveur informatique 20. Cela permet donc de choisir le format minimum défini par l'amplitude maximum possible entre 2 accélérations dans le modèle à transmettre. Ce choix peut être automatisé en fonction des caractéristiques du réseau de communication utilisé ou bien manuellement ajusté par l'utilisateur par exemple.

La présente invention permet d'offrir une sensation de latence de transmission nulle ou très réduite grâce à l'utilisation des valeurs prédictives : à chaque instant T(n), le terminal informatique 10 connaît déjà des valeurs prédictives de position, vitesse, et/ou accélération de l'instant T(n+1) : soit xp(n+1), vp(n+1), et ap(n+1).

Ainsi, dans le cas de données uniformément variées à transmettre, le terminal informatique 10 pourra anticiper les valeurs probables des instants suivants et donc permettre par exemple à l'utilisateur d'une application à distance d'interagir avec son interface graphique au plus tôt, après que sa commande d'interaction ait été transmise au serveur informatique 20.

Ce procédé pourra même simuler un temps de transmission nul dès lors qu'il est inférieur à la période T(n+1) - T(n) définie.

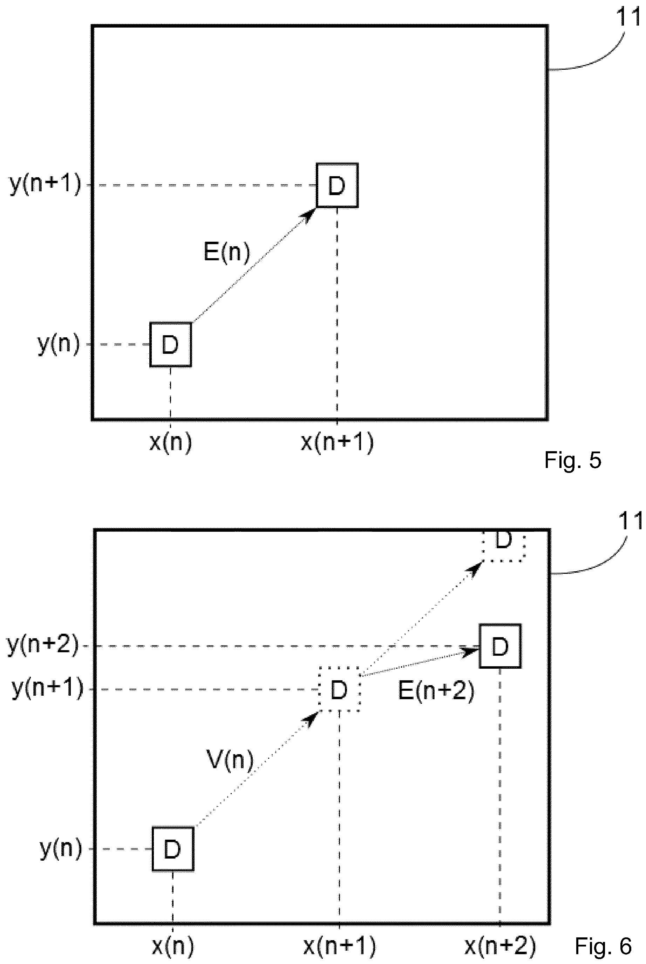

Nous allons à présent illustrer la présente invention au travers de plusieurs exemples illustrés en figure 5 à 7.

La figure 5 représente le dispositif d'affichage 11 du terminal informatique 10. La donnée D, ici un pixel par exemple ou bien un groupe de pixels, voire un voxel ou bien un groupe de voxel, est représenté au point de coordonnées x(n), y(n) à l'instant T(n). Dans cette situation, l'attribut A de la donnée D peut comprendre la position de la donnée D sur l'écran d'affichage, ainsi A(n) = (x(n), y(n)).

Selon un premier mode de réalisation, le terminal informatique 10 a reçu le paramètre d'évolution E(n) de l'attribut A(n) de sorte qu'il est capable de déterminer A(n+1) sans que le serveur informatique 20 ne lui transmette une autre information. Aussi, connaissant E(n), le terminal informatique 10 peut calculer A(n+1) à partir de A(n) en luis appliquant E(n). Si bien que E(n) permet d'obtenir x(n+1) à partir de x(n) et y(n+1) à partir y(n).

Selon un deuxième mode de réalisation, le terminal informatique 10 a reçu l'état A(n+1) de l'attribut A(n) de sorte qu'il est capable de déterminer E(n) sans que le serveur informatique 20 ne lui transmette une autre information. Aussi, connaissant A(n+1), et de préférence, mais on limitativement en connaissant la loi générique d'évolution, le terminal informatique 10 peut calculer E(n) à partir de A(n) et de A(n+1). Si bien que la trajectoire, c'est dire l'ensemble des coordonnées (x,y), que suivra l'objet D entre A(n) et A(n+1) sera calculé après déduction de E(n). Selon ce mode de réalisation, le point de départ et le point d'arrivée sont connus, il ne reste qu'à déterminer la trajectoire à suivre, c'est-à-dire E(n).

La loi générique d'évolution est une ou plusieurs règles permettant de déterminer le paramètre E(n) d'évolution à partir de A(n) et de A(n+1). En effet, il existe de nombreux chemins pour atteindre A(n+1) depuis A(n). Des chemins par exemple suivant une progression linéaire ou non, pouvant être exponentielle également, etc... Aussi, il convient, selon un mode de réalisation, de définir au moins une règle générique relativement à la loi évolutive à appliquer.

La figure 6 représente, selon un mode de réalisation, le dispositif d'affichage 11 d'un terminal informatique 10. Ce dispositif d'affichage 11 affiche à un temps T(n) une donnée D sous la forme d'un voxel par exemple dont l'attribut A est une position spatiale et dont l'état A(n) dudit attribut A à l'instant T(n) correspond aux coordonnées x(n) et y(n). Selon un mode de réalisation, le terminal informatique 10 a reçu en plus de l'état A(n) pour la donnée D, un vecteur vitesse v(n) permettant au terminal informatique 10 d'évaluer et donc de prédire les futures positions dudit voxel D sauf contre ordre envoyé par le serveur informatique 20 par exemple.

Aussi, à l'instant T(n+1), l'attribut A du voxel D a pour état A(n+1) = (x(n+1), y(n+1)). Le voxel D se trouve donc aux coordonnées x(n+1) et y(n+1) sur le dispositif d'affichage.

De préférence, les diverses positions entre A(n) et A(n+1) ont été calculées et affichées sur la base de v(n) par le terminal informatique 10. Ici v(n) correspond au paramètre d'évolution E(n).

Selon l'exemple illustré par la figure 6, à l'instant T(n+1) par exemple, le terminal informatique 10 reçoit un paramètre d'évolution E(n+2) venant donc corriger le précédent paramètre d'évolution correspondant à v(n).

Ainsi, en appliquant le nouveau paramètre d'évolution E(n+2) le voxel D change de trajectoire et ne suit plus une trajectoire rectiligne uniforme, mais dévie selon la nouvelle information reçue. Il s'en suit, qu'en absence d'un nouvel état de l'attribut A, le voxel D va poursuivre son déplacement selon le dernier paramètre d'évolution reçu.

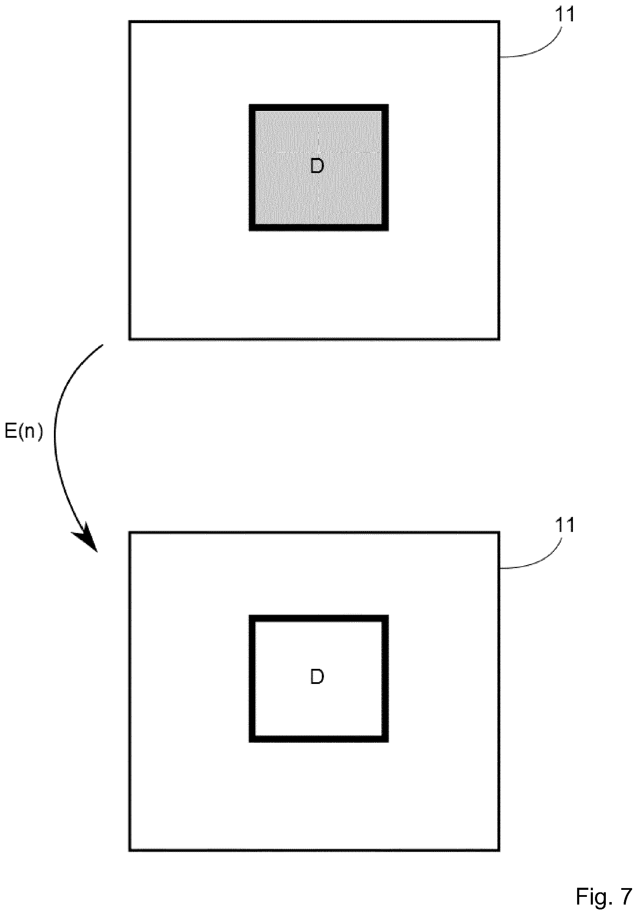

La figure 7 représente, selon un mode de réalisation, un exemple de mise en œuvre de la présente invention. Selon cet exemple, l'attribut A de la donnée D correspond au niveau de transparence de l'objet D. Aussi, l'état A(n) correspond à un coefficient de transparence de l'objet D à l'instant T(n).

Selon cet exemple, l'application d'un paramètre d'évolution E(n), par exemple, entraîne une modification de l'état A(n) de sorte qu'à l'instant T(n+1), A(n+1) soit différent de A(n), et selon cet exemple, soit supérieur à A(n), si bien que l'objet D est donc plus transparent à l'instant T(n+1) qu'à l'instant T(n).

Ces exemples ne sont nullement limitatifs. La présente invention peut être appliquée à tous types de données et à tous types d'attributs. L'analogie à une position, vitesse et accélération n'est qu'à titre illustratif.

La présente invention permet la réduction du coût de production et de la consommation des terminaux. En effet, la présente invention permet de réduire les besoins en mémoire et en puissance des appareils électroniques actuels qui, selon la présente invention, n'ont plus besoin de stocker et d'exécuter localement les applications et systèmes d'exploitation. Comme mentionné précédemment, dans l'art antérieur une partie souvent très importante de la mémoire non volatile des appareils électroniques est utilisée pour stocker le système d'exploitation et les applications installées. La présente invention permet de les délocaliser, de les déporter sur un ou plusieurs serveurs informatiques et ainsi de diminuer de façon importante les besoins en mémoire des terminaux.

Il en découle inévitablement une chute des coûts de fabrication de nouveaux terminaux informatiques basés sur la présente invention puisque les tailles des mémoires non volatiles et même parfois volatiles nécessaires à leur fonctionnement seront diminuées.

Il en ressort également que la présente invention permet une réduction de la consommation énergétique des terminaux puisque la majeure partie des traitements algorithmiques sont déportés sur un ou des serveurs informatiques.

Selon un mode de réalisation avantageux, la présente invention concerne également un circuit électronique configuré pour permettre la mise en œuvre du procédé précédemment présenté. Ce circuit électronique peut être soit intégré dans la fabrication des terminaux, soit être ajouté à des terminaux existants grâce à une interface quelconque, par exemple USB, Réseau, PCMCIA, à titre non exhaustif.

Selon un mode de réalisation, le circuit électronique comprend au moins un processeur, au moins une mémoire non transitoire stockant un produit programme d'ordinateur comportant des instructions exécutables par ledit au moins un processeur, lesdites instructions étant configurées pour exécuter en partie au moins le procédé selon la présente invention.

De manière avantageuse, ce circuit électronique est destiné à être intégré dans un nouveau type de processeurs, permettant ainsi d'obtenir des architectures matérielles performantes optimisées en termes de coût, de taille, et de consommation énergétique.

La présente invention apporte également de nombreux avantages en termes de maintenance. En effet, puisque les systèmes d'exploitation et les applications et services sont déportés, délocalisés dans un ou plusieurs serveurs informatiques, les terminaux n'ont plus besoin de les mettre à jour et n'en sont plus dépendants. Le ou les serveurs informatiques se chargent de mettre à jour l'ensemble des systèmes d'exploitation et/ou des applications. De manière astucieuse, il est même possible de rendre l'ensemble des versions d'un système d'exploitation disponibles à distance.

Selon un mode de réalisation, la présente invention permet de rendre accessible à toute entité de support, l'interaction entre le serveur informatique et le terminal informatique, et même de prendre le contrôle de tout terminal informatique à la place de son utilisateur grâce à son accès privilégié serveur. Il est alors possible plus facilement pour un centre de support de surveiller le fonctionnement des terminaux, et d'aider un utilisateur à se servir des systèmes d'exploitation et des applications à distance.

De manière astucieuse, la présente invention permet qu'aucune modification ou adaptation d'application soit nécessaire. Ainsi pour le fournisseur d'une application, il n'y a pas d'effort à réaliser pour adapter son application à la présente invention. De plus, il est moins nécessaire de tester une application sur l'ensemble des versions des systèmes d'exploitation utilisés ou sur l'ensemble des terminaux, ou encore de forcer l'utilisation ou l'installation d'une nouvelle version de système d'exploitation à installer par un utilisateur sur son terminal informatique. Avec la présente invention, une application sera fonctionnelle à distance pour l'ensemble des terminaux dès lors qu'elle fonctionne sur une version choisie du système d'exploitation préféré.

Selon un mode de réalisation, la présente invention permet la mise en œuvre de solutions de téléconférence et/ou de télédiffusion de haute qualité et à faible latence.

Selon un mode de réalisation, la présente invention permet de créer une solution de téléconférence de qualité et à faible latence dans laquelle :

i. Chaque terminal informatique jour le rôle de client et de serveur informatique,
ii. chaque terminal informatique est équipé d'un système de capture d'image, de préférence de capture de vidée, et avantageusement de modélisation 3D temps réel. Cela permet de représenter en temps réel une personne, son visage et les objets qui l'entourent par des objets numériques 3D par exemple,
iii. chaque terminal informatique transmet via un réseau de communication de type l'Internet par exemple des commandes, des données, les animations et les évolutions de la représentation du modèle 3D via le procédé de la présente invention.

Selon un autre mode de réalisation, la présente invention permet de créer une solution de retransmission temps réel d'événements en haute qualité et à faible latence. Cela avec la même méthode que pour la solution de visioconférence précédente, mais dans un mode unidirectionnel. En effet, de préférence seul un terminal informatique joue le rôle de serveur informatique et dessert un ensemble de terminaux clients. Ici seul el terminal informatique serveur se doit d'être équipé du système de capture d'images, de vidéo ou de modélisation 3D.

Selon un mode de réalisation, la présente invention permet d'obtenir des applications collaboratives mieux synchronisées et de très bonne qualité. Selon l'art antérieur, de nombreuses applications collaboratives y compris des jeux multi-joueurs existent aujourd'hui, cependant la fluidité et la réactivité de leurs interfaces sont souvent de mauvaise qualité. Or, la présente invention permet de développer et de donner accès à de nouvelles applications collaboratives de bien meilleure qualité. En effet, l'ensemble des interfaces contextuelles des différents utilisateurs est centralisé dans l'application s'exécutant sur le serveur informatique et est généré de façon simultanée pour l'ensemble des utilisateurs qui interagissent entre eux et avec ces applications via leurs terminaux respectifs.

Selon un mode de réalisation, la présente invention permet également la mise en œuvre de solutions pour la compression de données statiques. Le procédé de transmission de l'invention peut être utilisé pour la compression de données statiques, voire pour le stockage de données statiques, particulièrement si elles représentent une suite de données dont les valeurs subissent des variations généralement uniformément accélérées.

Selon un mode de réalisation, la présente invention concerne un procédé de compression de données. Ce procédé de compression de données peut être mis en œuvre et exploité indépendamment du procédé de transmission décrit et revendiqué dans la présente demande.

Selon un mode de réalisation, la temporalité précédemment décrite par T(n) peut être remplacée par une dimension spatiale P(n) définissant la position dans une suite de position d'une donnée statique. On obtient ainsi non pas l'émission à certains T(n) de données, mais des variations pour certains P(n) de valeurs de données statiques.

Selon cet exemple, le procédé de compression de donnée peut comprendre les étapes suivantes :

i. la phase d'initialisation comprend :

a. Un enregistrement d'une première valeur correspondant à la première valeur des données statiques,
b. Un enregistrement d'une deuxième valeur correspondant à l'accélération de la seconde valeur des données statiques,

ii. Les phases à accélération constantes comprennent :

a. Un suivi de la valeur de ladite accélération ou de sa variation,
b. Un suivi d'un nombre qui représente le nombre de positions pendant laquelle ladite accélération reste constante, le nombre de positions correspondant au nombre de données statiques consécutives.
c. Un enregistrement d'une troisième valeur correspondant audit nombre de positions pendant laquelle l'accélération reste constante.

iii. Les phases de changement d'accélération comprennent :

a. Un suivi de la valeur de la nouvelle accélération ou de sa variation

b. La valeur suivante est égale à la nouvelle accélération ou sa variation par rapport à la précédente valeur d'accélération,

c. Un enregistrement d'une quatrième valeur correspondant à ladite nouvelle accélération.

d. Selon un mode de réalisation, la quatrième valeur est égale à 1 si cette phase est à nouveau suivie d'une phase de changement d'accélération.

Le ou les enregistrements des valeurs sont de préférence réalisés par un dispositif de mémorisation. Ce dispositif de mémorisation comprend un support d'enregistrement de préférence non transitoire. Ce dispositif de mémorisation peut par exemple être un disque dur, une clef USB, une carte mémoire, une mémoire ou plus généralement tout support apte à stocker au moins une donnée informatique. On entend, par dispositif de mémorisation, une mémoire dans la présente description.

Ce procédé de compression de données décrit ci-dessus peut être mis en œuvre et exploité indépendamment du procédé de transmission décrit et revendiqué dans la présente demande.

Ce procédé de compression, également appelée étape ou phase de compression, permet de coder non pas les valeurs exactes d'une suite de données, mais uniquement les variations relatives de chaque valeur en fonction de la précédente par exemple.

Cela revient à enregistrer une valeur numérique de départ, puis d'encoder à la suite uniquement les changements d'accélération, c'est-à-dire les changements du rythme de variation entre chaque valeur, relativement aux positions desdites valeurs. On obtient ainsi un point de départ suivi des paramètres d'une trajectoire définissant les autres valeurs à compresser en fonction du point de départ et de leurs variations relatives.

Cela revient à indiquer uniquement les changements de direction à un conducteur sur une route et non lui indiquer chaque mètre qu'il doit continuer tout droit par exemple.

Ce procédé de compression, ou encore cette étape ou phase de compression, peut ainsi être utilisée en combinaison avec le procédé de transmission de sorte à ne transmettre les données que sous une forme compressée par exemple.

Selon un mode de réalisation, ce procédé de compression peut être utilisé pour la sauvegarde de données sous une forme compressée.

Selon un mode de réalisation, le procédé de transmission selon la présente invention peut être complété par une étape d'émission depuis le terminal informatique ou bien depuis un dispositif en communication avec le serveur informatique d'une donnée de pilotage destinée à modifier la donnée D, de préférence l"attribut A de la donnée D, avantageusement l'état A(n) de l'attribut A de la donnée D à l'instant T(n), et/ou le paramètre d'évolution E(n) à l'instant T(n).

De manière avantageuse, cette étape d'émission permet d'envoyer des données au serveur informatique pouvant ou non influer sur les données reçues par le terminal informatique et cela depuis le terminal informatique et/ou depuis tout dispositif en communication avec ledit serveur informatique.

Ce mode de réalisation trouve particulièrement son application dans le cas des décodeurs non connectés en liaison montante à un serveur informatique, par exemple des décodeurs de télévisions, recevant leurs données d'affichage depuis le serveur informatique via un réseau satellitaire, mais n'étant pas apte à transmettre des instructions de l'utilisateur vers le serveur informatique. Dans ce type de situation, la présente invention permet à l'utilisateur de transmettre des données et/ou des instructions via par exemple un ordinateur ou un téléphone intelligent au serveur informatique indépendamment du terminal informatique qui se trouve être ici le décodeur de la télévision par exemple non limitatif.

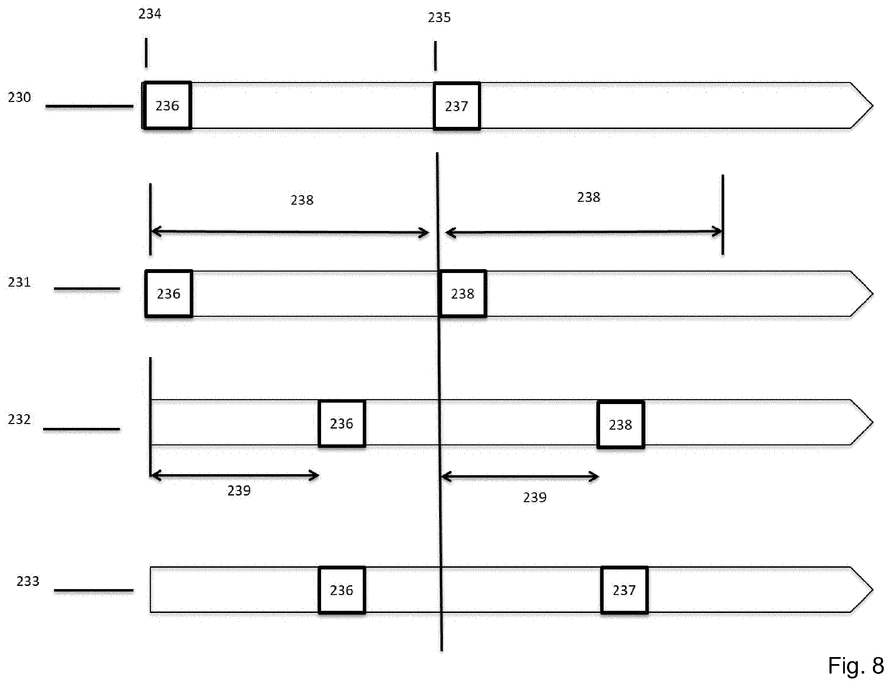

Nous allons à présent décrire un mode de réalisation, compatible avec les précédents et illustré au travers des figures 8 à 18.

Selon ce mode de réalisation, et tel que précédemment énoncé, dans le cas où les données sont à 2 ou 3 dimensions comme une position de coordonnées x, y, z, la présente invention peut s'appliquer à x, à y et à z.

Dans le cas où le client, appelé également terminal 10, interagit avec le serveur informatique 20, La présente invention peut être utilisée à la fois pour une transmission de donnée depuis le client 10 vers serveur informatique 20 que dans le sens inverse, c'est-à-dire depuis le serveur informatique 20 vers le client 10. Par exemple, il peut s'agir de la transmission de données de pilotage de l'interface graphique d'une application utilisée à distance via un smartphone, correspondant aux mouvements des doigts de l'utilisateur qui se déplacent sur l'écran tactile.

Nous allons à présent décrire, au travers des figures 8, 9, 10, 19a, 19b et 19c, les phases du procédé de transmission selon un mode de réalisation de la présente invention.

De préférence, le procédé de transmission comprend 4 types de phases selon un mode de réalisation qui vont être décrites de manière narrative afin d'en expliciter au mieux le fonctionnement :

i. Une phase d'initialisation (à T0, T1) tel que représentée en figure 8, Cette phase comprend au moins les étapes suivantes :

a. Au tout début de l'utilisation d'une application distante, à l'instant T0 (234) :

- x est à la valeur x0 (236) telle que définie (230) sur le serveur informatique 20, par exemple par l'application,
- l'accélération a0 de x0 ne peut être calculée et est considérée nulle,
- la vitesse de variation de x appelée v0 est considérée nulle,
- le serveur informatique 20 transmet (231) au client 10 la valeur réelle de x soit x0 (236),
- le client 10 reçoit (232) la valeur x0 (236) un instant de transmission plus tard (239),
- le client 10 utilise (233) la valeur x0 (236), par exemple il affiche le point x à la coordonné x0,

b. A l'instant suivant T1 (235) :

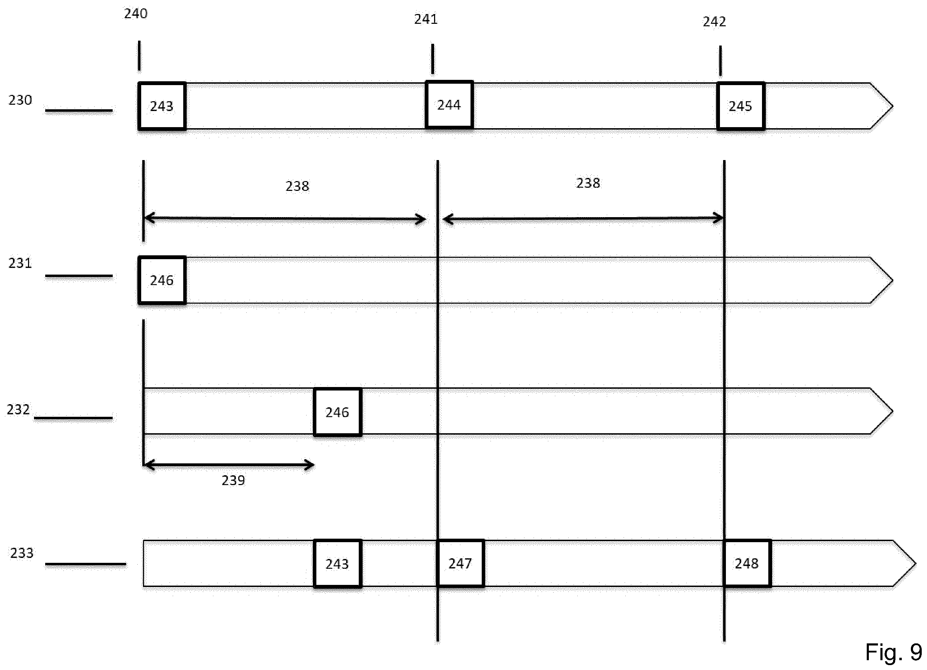

- La valeur de x est x1 (237) telle que définie (230) sur le serveur informatique 20, par exemple par l'application,
- Du côté du serveur informatique 20, il est possible de calculer une vitesse v1 qui est égale à (x1-x0)/T, T étant la période (238),
- Du côté du serveur informatique 20, il est calculé une accélération a1 (238) qui est égale à v1/T,
- Le serveur informatique 20 transmet (231) la valeur a1 (238) au client 10,
- Le client 10 reçoit (232) la valeur a1 (238) un instant de transmission plus tard (239),
- Le client 10 peut calculer la valeur de x1 = x0 + 1/2.a1.T^2
- Le client 10 utilise (233) la valeur x1 (237), par exemple pour les besoins de l'affichage du point x à la coordonnée x1,

ii. Une ou plusieurs phases d'accélération constantes, tel qu'illustré en figure 9, comprenant au moins les étapes suivantes :

a. On notera que pendant ces phases qui sont les plus courantes en cas de variations uniformément accélérées, l'accélération a(n) à l'instant T(n) (241) sera identique à l'accélération a(n-1) à l'instant T(n-1) (240).
b. A l'instant T(n) (241) :

- La valeur de x est x(n) (244), telle que définie (230) sur le serveur informatique 20, par exemple par l'application,
- Du côté du serveur informatique 20, il est calculé grâce aux précédentes valeurs dont x(n-1) (243) une accélération a(n) qui est égale à a(n)=v(n)-v(n-1)/T^2 dans lequel v(n) a pu être calculé par v(n)=(x(n)-x(n-1))/T),
- Dans cette phase, le serveur informatique 20 voit que a(n) est égal à a(n-1) (246) précédemment transmise (231) à T(n-1) (240),
- Le serveur informatique 20 ne transmets pas (231) la valeur a(n) au client 10,
- Au même instant T(n) (241), le client 10 suppose que a(n)=a(n-1),
- Le client 10 utilise (233) pour x : la valeur prédictive xp(n) (247) avec

$$xp(n)=xc(n-1)+vc(n-1)*T+1/2*ap(n)*T^2 \text{ où } ap(n) = ac(n-1) ;$$

a(n-1) est la dernière valeur connue de l'accélération de x par le client 10, qui pouvait soit être une valeur reçue par le serveur informatique 20 ac(n-1) soit une valeur prédictive ap(n-1) selon la phase de T(n-1). On aura dans ce cas xp(n) (247) = x(n) (244) aux erreurs d'approximation près.
- Le client 10 ne reçoit finalement pas de nouvelle valeur de a(n) puisque non transmise. La nouvelle valeur prédictive ap(n+1) devient ap(n) qui est égale à a(n) et a(n-1) dans cette phase ;

Cette phase permet de calculer et d'utiliser (233) à l'instant T(n+1) (242) la valeur prédictive xp(n+1) (248) comme fait avec xp(n) (247), qui n'a pas été transmise par le serveur informatique 20 non plus. On aura aussi xp(n+1) (248) = x(n+1) (245) aux erreurs d'approximation près.

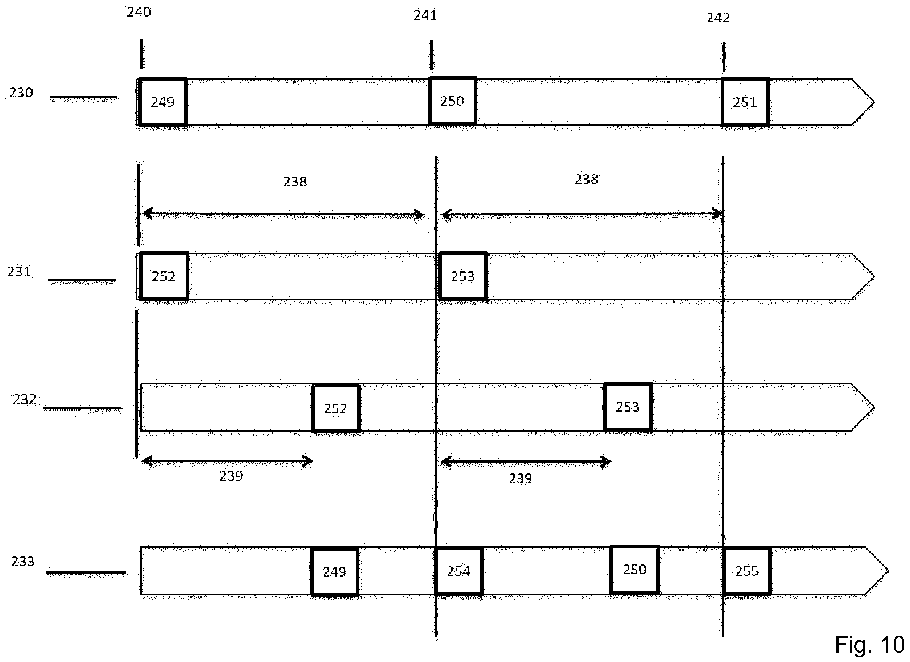

i. Une ou plusieurs phases de changement d'accélération, tel qu'illustré en figure 10, comprenant au moins les étapes suivantes :

a. Pendant ces phases, les nouvelles valeurs d'accélération de x doivent être transmises au client 10 pour qu'il puisse en déduire les nouvelles valeurs de x.

b. A l'instant T(n) (241) :

- Nous sommes dans le cas où l'accélération de x est différente de l'accélération de x à l'instant T(n-1) (240),
- La valeur de x est x(n) (250), telle que définie (230) sur le serveur informatique 20, par exemple par l'application,
- Du côté du serveur informatique 20, il est calculé une accélération a(n) (253) qui est égale à a(n) =v(n)-v(n-1)/T^2 avec v(n) qui peut être calculé par v(n)=(x(n)-x(n-1))/T),
- Dans cette phase, le serveur informatique 20 voit que a(n) est différent de a(n-1) (252),
- Le serveur informatique 20 transmet (231) la valeur a(n) (253) à l'instant T(n) (241),
- Au même instant T(n) (241), le client 10 n'a pas encore reçu la valeur a(n) (253), il suppose que a(n)=a(n-1) et utilise (233) pour x la valeur prédictive xp(n) (254) avec :

$$xp(n)=xc(n-1)+vc(n-1)*T+1/2*ap(n)*T^2 \text{ avec } ap(n) = ap(n-1) \text{ ou } ac(n-1) ;$$

a(n-1) est la dernière valeur connue de l'accélération de x par le client 10, qui pouvait soit être une valeur reçue par le serveur informatique 20 a(n-1) (252) soit une valeur prédictive ap(n-1) selon la phase de T(n-1). Selon la figure 10, on représente schématique une situation où le serveur informatique 20 aurait émis a(n-1) (252) à destination du client 10, cependant cela ne serait pas le cas si l'instant T(n-1) (240) correspondait à une phase d'accélération constante ;

- Un instant de transmission plus tard, le client 10 reçoit la valeur a(n) (253) qui est finalement différente de a(n-1) dans le cas de cette phase, et calcule la nouvelle véritable valeur de x avec xc(n)=xc(n-1)+vc(n-1) *T+1/2*a(n)*T^2 (250)
- Le client 10 corrige (233) alors la valeur prédictive utilisée xp(n) (254) par la valeur xc(n) (250) qui est égale à x(n).

La nouvelle valeur prédictive ap(n+1) devient a(n) pour calculer la valeur prédictive de xp(n+1) (255).

Aussi, du côté du serveur informatique (230), la valeur de x (251) à l'instant T(n+1) (242) entrainera ou pas la transmission (231) d'une nouvelle valeur d'accélération de x, impliquant ou pas de corriger la valeur prédictive xp(n+1) (255) un instant de transmission plus tard.

i. Une ou plusieurs phases de resynchronisation et/ou de correction d'erreurs comprenant au moins les étapes suivantes :

a. Cette phase est nécessaire lorsque le serveur informatique 20 et/ou le client 10 détecte une perte de connexion et/ou de réception d'une ou de plusieurs périodes consécutives selon la qualité de service désirée ;

b. Cette phase est nécessaire lorsque le client 10 utilise des valeurs prédictives pendant de longues périodes consécutives, de telle sorte que la précision de la nouvelle valeur prédictive ne devient pas acceptable ; Cela peut être le cas par exemple si la précision utilisée pour l'accélération transmise peut générer une erreur supérieure à une valeur prédéfinie ou à un seuil prédéterminé par la configuration de la transmission ;

c. Cette phase est sensiblement identique à une phase d'initialisation :

- Le serveur informatique 20 transmet au client 10 la valeur x(n) à un instant T(n), comme lors de la transmission de x0 à l'instant T0 ;
- Le serveur informatique 20 transmet au client 10 la valeur a(n+1) à l'instant T(n+1), comme lors de la transmission de a1 à l'instant T1.

Nous allons à présent décrire le fonctionnement du client 10 et la détection des changements de phase selon un mode de réalisation de la présente invention compatible avec les modes de réalisation précédemment présentés :

i. Le client 10 ne sachant pas à l'avance qu'il va y avoir un changement d'accélération, il considère qu'il est dans une phase d'accélération constante telle que précédemment décrite car c'est la plus courante lors de variations uniformément accélérées ;

ii. Si le client 10 ne reçoit rien pendant un temps supérieur à T depuis la dernière valeur reçue ou prédite à la période T(n), il utilise la valeur prédictive xp(n+1) dès le début de la période T(n+1) définie par la phase d'accélération constante,

iii. Si le client 10 reçoit une nouvelle valeur d'accélération pendant la période T(n+1), il utilise cette nouvelle valeur et remplace la valeur prédictive xp(n+1) par cette nouvelle valeur corrigée xc(n+1) définie par la phase de changement d'accélération.

Nous allons à présent illustré les impacts sur le débit d'une transmission mise en œuvre par la présente invention :

i. Dans le cas de données subissant des variations uniformément accélérées la plupart du temps, le système mettant en œuvre la présente invention se trouve alors dans des phases d'accélération constante la plupart du temps : le nombre de données à envoyer est considérablement réduit puisqu'il n'y a pas de nouvelle information à transmettre au client 10 pendant les phases d'accélération constante ;

ii. C'est seulement dans une phase de changement d'accélération des variations des valeurs, par exemple correspondant à un changement de trajectoire quand il s'agit de coordonnées, ou des phases d'initialisation ou de resynchronisation, par exemple lors de gestion d'erreurs ou de perte de connexion, que le serveur informatique 20 transmet au client 10 de nouvelles valeurs des données ;

iii. De manière avantageuse, la taille utile des données à transmettre est plus petite dans les cas généraux de transmission de données de l'art antérieur :

a. Par exemple, si les valeurs ou les positions tiennent sur 4 octets, et l'accélération sur 1 octet : la taille utile est divisée par 4 ;

b. Par exemple, si les valeurs ou les positions tiennent sur 4 octets, et l'accélération sur 2 octets : la taille utile est divisée par 2.

iv. De manière avantageuse, les variations d'accélération étant relativement faibles quand il s'agit de transmettre un modèle représentant le mouvement d'interfaces ou des scènes graphiques de représentation numérique d'un monde réel ou virtuel, voire même avec lequel un utilisateur peut interagir, le système pourra être configuré pour transmettre la variation de l'accélération entre T(n+1) et T(n), soit a(n+1)-a(n-1) plutôt que a(n+1) pour réduire au maximum le besoin de l'information à transmettre, et donc de choisir le format minimum défini par l'amplitude maximum possible entre deux accélérations dans le modèle à transmettre.

Nous allons à présent illustré les impacts sur la latence et la perception des temps de transmission via l'utilisation de la présente invention :

i. Le procédé selon la présente invention permet d'offrir une sensation de latence de transmission nulle ou très réduite grâce à l'utilisation des valeurs prédictives : à chaque instant T(n), le client 10 a déjà des valeurs prédictives de valeurs ou de positions, de vitesse, et d'accélération de l'instant T(n+1) : soit xp(n+1), vp(n+1), et ap(n+1).

ii. Ainsi, dans le cas de données variant uniformément à transmettre par le serveur informatique 20, le client 10 peut anticiper les valeurs probables des instants suivants et donc permettre par exemple à l'utilisateur d'une application à distance d'interagir avec son interface graphique au plus tôt, après que sa commande d'interaction ait été transmise au serveur informatique 20 par le client 10.

iii. Le procédé selon la présente invention peut également simuler un temps de transmission nul dès lors qu'il est inférieur à la période T définie.

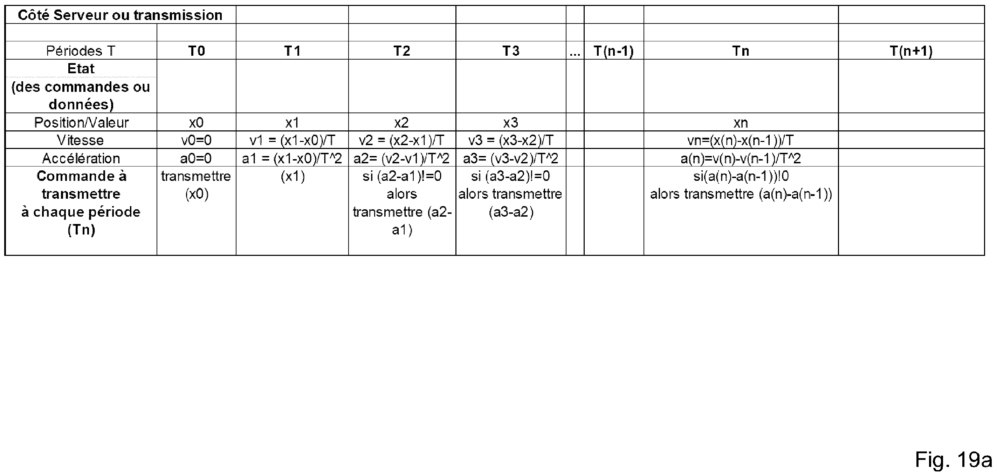

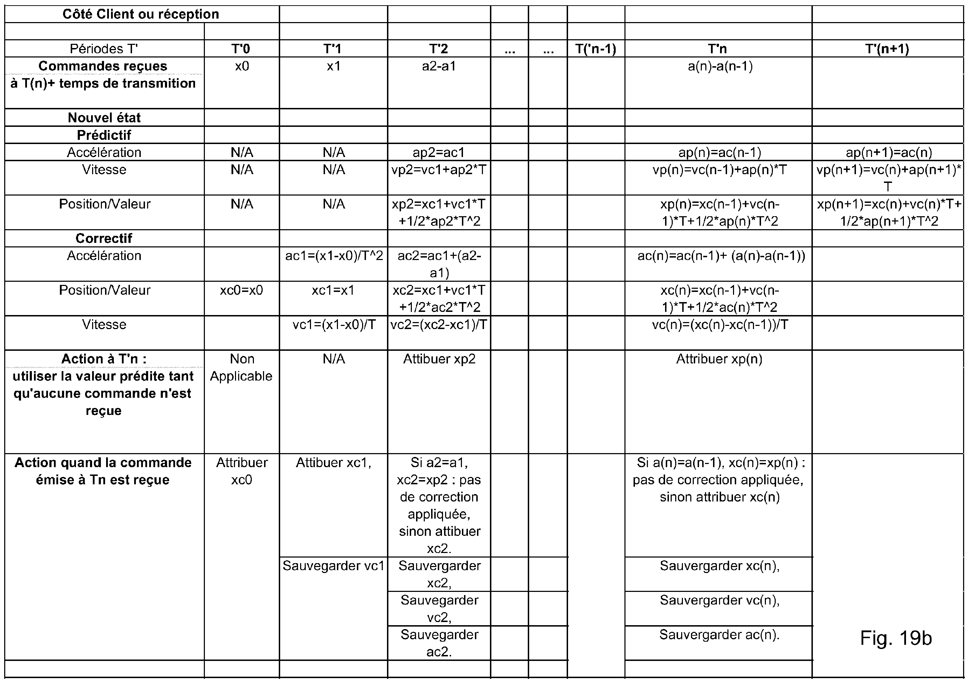

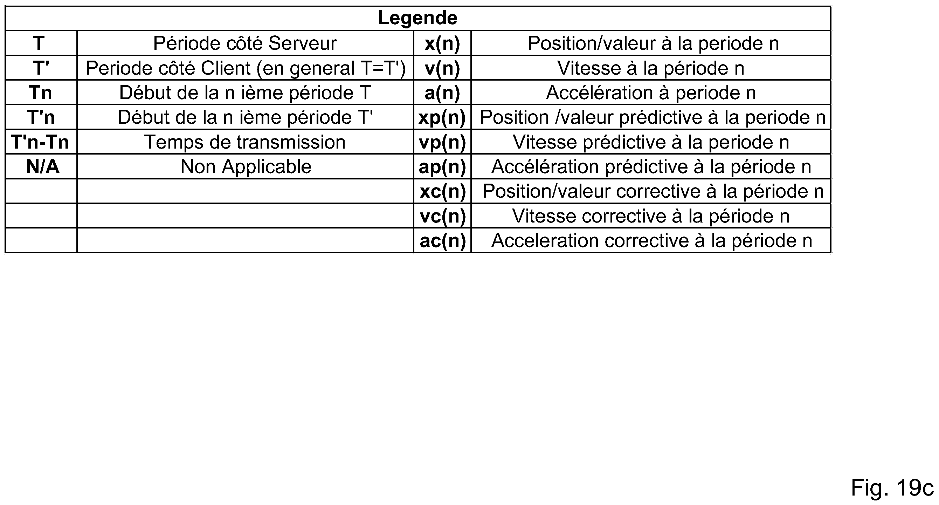

Les figures 19a, 19b et 19c illustrent, selon un mode de réalisation, une synthèse chronologique d'une partie au moins des étapes du procédé selon la présente invention. En particulier, la figure 19a présente, selon un mode de réalisation, les divers états des données ainsi que les commandes transmises au client, appelé également le terminal, par le serveur informatique en fonction de la période T considérée. De manière similaire, la figure 19b présente, selon un mode de réalisation, les diverses commandes reçues par le client depuis le serveur informatique et les diverses actions effectuées en fonction de la période T considérée. La figure 19c représente la légende correspondant aux figures 19a et 19b selon un mode de réalisation de la présente invention.

Nous allons à présents illustré une partie des avantages apportés par la présente invention :

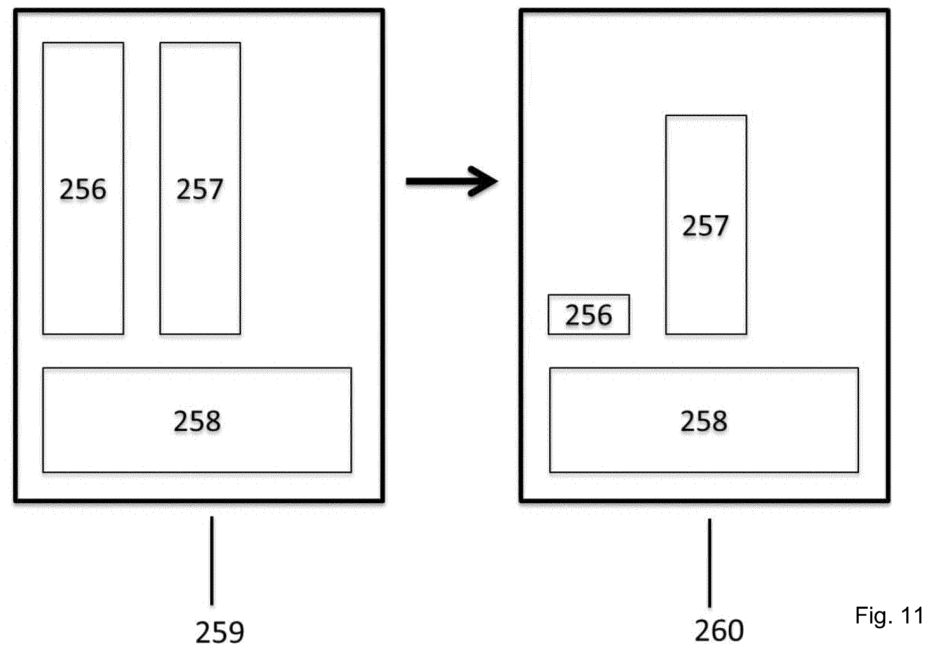

i. Réduction du coût et de la consommation des appareils à court terme, tel qu'illustré en figure 11 :

a. La présente invention permet de réduire les besoins en mémoires et en puissance des appareils électroniques actuels (259) qui n'ont alors plus besoin de stocker et exécuter localement, via un processeur (258), un système d'exploitation par exemple et/ou des applications. Aujourd'hui une partie souvent très importante de la mémoire non volatile des appareils électroniques est utilisée pour stocker le système d'exploitation et les applications installées. Les déporter permet donc de diminuer de façon importante leur besoin en mémoire. Ainsi, les coûts de fabrication de nouveaux appareils (260) basés sur la présente invention sont réduits puisque les tailles des mémoires non volatiles (256) et même parfois volatiles (257) nécessaires à leur fabrication sont diminuées.

b. La présente invention permet de diminuer la consommation électrique des appareils électroniques. En effet, de préférence, il n'y a pas de système d'exploitation et/ou d'applications s'exécutant localement, et pas non plus d'autres applications qui tournent en tâche de fond sur l'appareil électronique comme sur les appareils actuels de l'art antérieur. Cela permet donc de réduire la consommation énergétique des appareils électriques utilisant la présente invention.

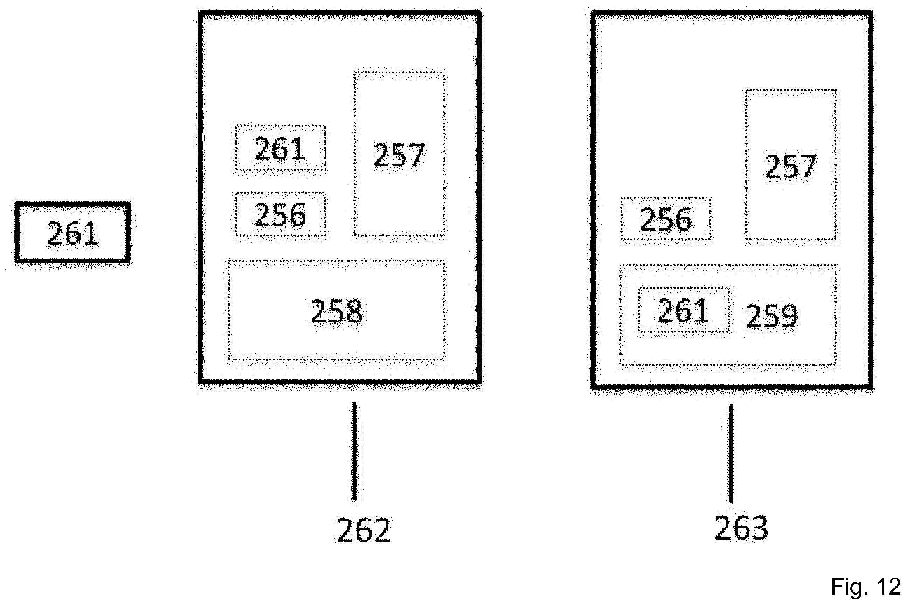

ii. Seconde optimisation du coût des appareils, c'est-à-dire des clients 10, et des serveurs informatiques 20, tel qu'illustré en figure 12 :

a. La présente invention peut, selon un mode de réalisation, nécessiter plusieurs calculs d'addition et/ou de multiplication dans le cas de l'utilisation de certaines applications. De manière astucieuse, la présente invention concerne également un circuit électronique (261) qui permet de gérer ces calculs afin de ne pas encombrer les processeurs principaux des appareils électroniques en ce qui concerne les clients 10. Cela peut également être appliqué côté serveur informatiques 20 selon un mode de réalisation. Ce circuit électronique peut être soit intégré dans la fabrication des appareils électroniques (262, 263), soit ajouté à des appareils existants grâce à une interface, par exemple USB, Réseau, PCMCIA, à titre d'exemple non exhaustif et non limitatif.

b. Ce circuit électronique dédié peut, de préférence, être intégré dans des nouveaux processeurs (259), permettant ainsi d'obtenir des architectures matérielles performantes et optimisées en termes de coût, de taille, et de consommation énergétique.

iii. La maintenance des appareils électroniques, c'est-à-dire des clients 10, des systèmes d'exploitation et des applications est facilitée :

a. Puisque les systèmes d'exploitation et les applications et services sont déportés, les client 10 n'ont plus besoin de les mettre à jour et n'en sont plus dépendants. Le serveur informatique 20 se charge de mettre à jour l'ensemble des systèmes d'exploitation ou des applications de telle sorte qu'il est même possible de rendre l'ensemble des versions d'un système d'exploitation disponibles à distance pour un ou plusieurs clients 10 ;

b. De manière avantageuse, tout élément de support technique peut par exemple accéder aux échanges entre le serveur informatique 20 et le client 10, et même de prendre le contrôle de tout client 10 à la place de son utilisateur grâce à son accès privilégié dit « accès serveur ». Il est alors possible plus facilement pour un centre de support technique de surveiller le fonctionnement des clients 10, et par exemple d'aider un utilisateur à se servir des systèmes d'exploitation et/ou des applications à distance.

c. De manière astucieuse, pour le fournisseur d'une application, il n'y a pas d'effort à réaliser pour adapter son application au système d'exploitation ou au client. Aussi il est moins nécessaire de la tester sur l'ensemble des versions des systèmes d'exploitation utilisés ou sur l'ensemble des produits électroniques ; L'application du fournisseur est, via la présente invention, fonctionnelle à distance pour l'ensemble des appareils, c'est-à-dire des clients 10 également appelé terminal 10, dès lors que l'application fonctionne sur une version choisie du système d'exploitation préféré.

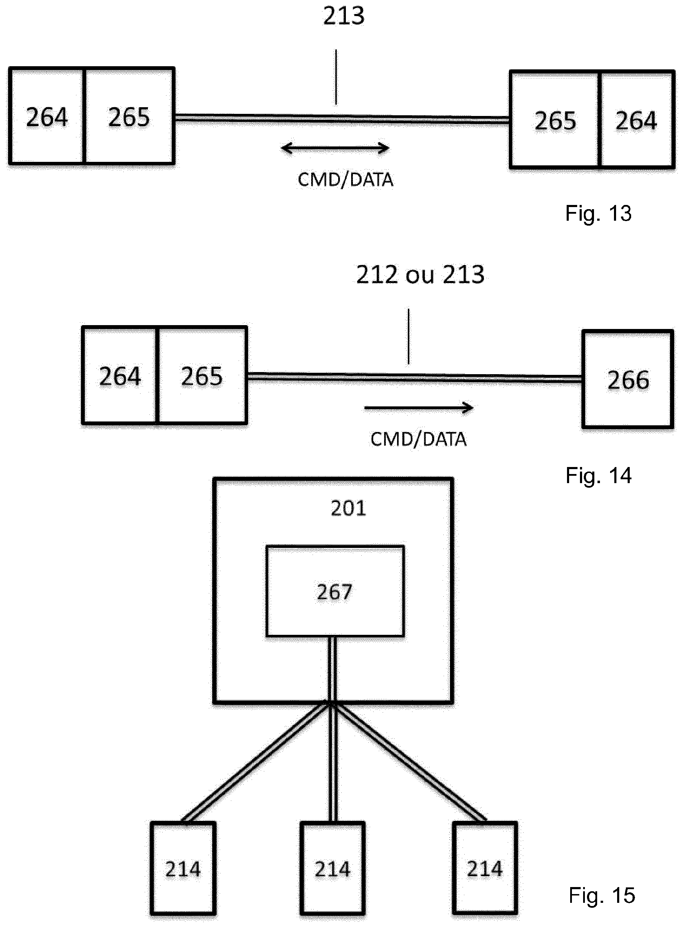

iv. Application de téléconférence ou de télédiffusion haute qualité et à faible latence, tel qu'illustré en figure 13 et 14 :

a. Dans l'art antérieur, des systèmes proposent aujourd'hui de modéliser en 3 dimensions et en temps réel des scènes réelles. En couplant ces systèmes (264) à la présente invention, et en particulier à son procédé de transmission, il est possible de créer une solution de téléconférence de qualité et à faible latence, tel qu'illustré en figure 13 :

- Selon un mode de réalisation, chaque appareil électronique (265) joue à la fois le rôle de client 10 et de serveur informatique 20,
- Chaque appareil électronique est équipé d'un système de capture et de modélisation 3D temps réel (264) : cela permet de représenter en temps réel une personne, son visage et les objets qui l'entourent par des objets numériques 3D,
- Chaque appareil électronique transmet, via un réseau (213) de communication, des commandes, des données (CMD/DATA), les animations et les évolutions de la représentation du modèle 3D par le biais de la présente invention ;

Et/ou une solution de retransmission temps réel d'événements en haute qualité et à faible latence, tel qu'illustré en figure 14 :

- Avec la même méthode que pour la solution de visioconférence précédente, mais dans un mode unidirectionnel.
- Par exemple, seul un émetteur (265) desservant un ensemble de clients 10 (266) est alors équipé du système de capture et de modélisation 3D (264).

v. Applications collaboratives mieux synchronisées et de très bonne qualité, tel qu'illustré en figure 15 :

a. De nombreuses applications collaboratives y compris des jeux vidéo multi-joueurs existent aujourd'hui, cependant la fluidité et la réactivité de leurs interfaces sont souvent de mauvaise qualité ;
b. Grâce au procédé de transmission décrit par la présente invention, il devient possible de développer et de donner accès à de nouvelles applications collaboratives (267) de bien meilleure qualité. En effet, l'ensemble des interfaces contextuelles des différents utilisateurs peut être centralisée dans l'application s'exécutant sur le serveur informatique 20 (201) et être générée de façon simultanée pour l'ensemble des utilisateurs qui interagissent avec ces applications via leurs appareils électroniques clients 10 (214).

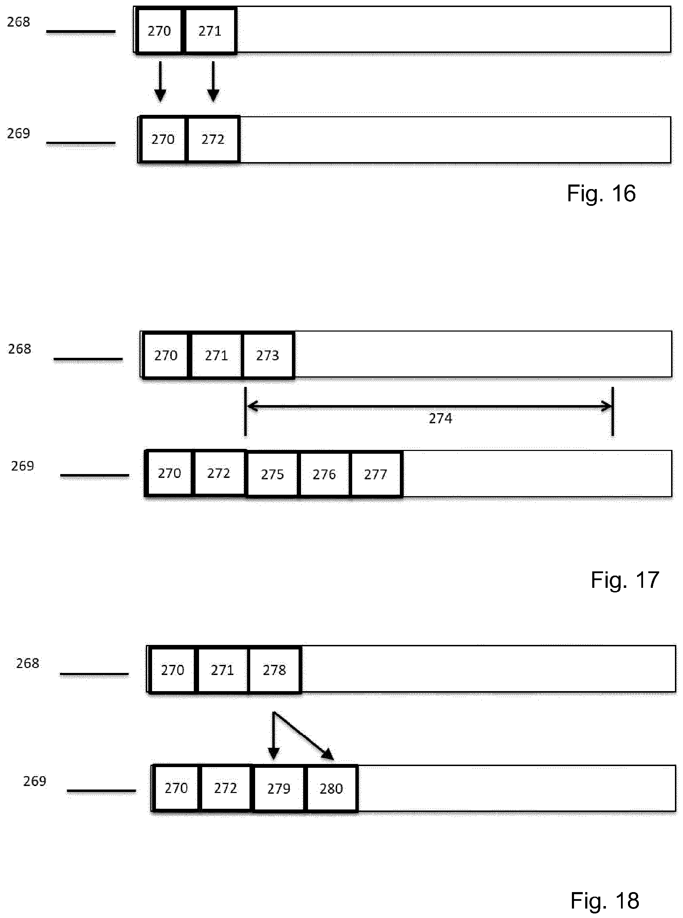

vi. Application à la compression de données statiques, tel qu'illustré en figure 16 à 18 :

a. La présente invention peut être utilisée pour la compression de données, de préférence de données statiques, et en particulier si elles représentent une suite de données dont les valeurs subissent des variations générale-lement uniformément accélérées ;
b. Pour cela, les périodes temporelles correspondant aux moments où des données doivent être émises ou pas, selon la phase considérée, sont remplacées dans le procédé par la position des données dans la suite de données à compresser (268) ; La présente invention permet ainsi de compresser un fichier numérique à compresser (268) en un fichier numérique compressé (269) ;
c. Puis, il faut appliquer les étapes du procédé selon la présente invention de sorte à ce que le procédé de transmission devienne un procédé de compression en construisant une nouvelle suite compressée (269) desdites données.
d. La phase d'initialisation, tel qu'illustré en figure 16, est définie ainsi :

- La première valeur du fichier à compresser (268) est gardée (270) dans le fichier compressé (269),
- La seconde valeur (272) du fichier compressé est égale à l'accélération entre la première valeur (270) et une deuxième valeur (271) du fichier à compresser (268),

e. Les phases à accélération constantes (274), tel qu'illustré en figure 17, sont marquées par :

- un identifiant de phase à accélération constante (275),
- suivie de la valeur de l'accélération ou sa variation (276),
- suivie d'un nombre qui représente le nombre de positions pendant laquelle l'accélération reste constante (277).

f. Les phases de changement d'accélération, tel qu'illustré en figure 18, sont marquées par :

- un identifiant de changement d'accélération (279) entre la deuxième valeur (271) du fichier à compresser et la troisième valeur (278) du fichier à compresser,
- suivie de la valeur de la nouvelle accélération ou sa variation (280),

g. Les phases de resynchronisation peuvent ne pas être nécessaires dans ce cas d'application puisqu'il ne s'agit pas d'une transmission mais bien d'une compression de données.

La présente invention permet ainsi de compresser des données en utilisant le procédé de transmission entre une source de données qui peut être un support non transitoire par exemple ou une source de collecte de données en temps réel, et un dispositif de mémorisation comprenant un support non transitoire apte à stocker les données transmises via le procédé de transmission de la présente invention.

Selon un mode de réalisation, la présente invention peut également être utilisée pour l'analyse de données. En particulier, la présente invention permet la conformation des données via le procédé de compression apportant une forme enrichie apte à présenter un intérêt d'analyse particulier.

Selon un mode de réalisation, les données transmises par le procédé selon la présente invention sont analysées par un dispositif d'analyse. Un dispositif d'analyse peut comprendre au moins un processeur et au moins un support d'enregistrement de données. Ce dispositif d'analyse est configuré pour réaliser une ou plusieurs analyses sur la base des données transmises. Un des avantages de la présente invention est alors un temps réduit d'analyse car le dispositif d'analyse peut concentrer ses ressources système sur l'analyse de données pertinentes dans une suite de données, voire sur l'analyse des variations dans ces données à la place des données elles-mêmes. Cette méthode d'analyse peut permettre d'accélérer le temps de traitement de données dans de nombreux domaines d'application.

L'invention n'est pas limitée aux modes de réalisations précédemment décrits et s'étend à tous les modes de réalisation couverts par les revendications.

**REFERENCES**

10 Terminal informatique
11 Dispositif d'affichage
12 Processeur
13 Mémoire
13a Système d'exploitation
13b Applications
13c Données personnelles
13d Partie Client
14 Batterie
15 Module de communication
16 Interface utilisateur
20 Serveur informatique
21 Processeur
22 Mémoire
22a Fichier d'installation
22b Fichier de mise à jour
22c Données personnelles
22d Partie serveur
22e Système d'exploitation
22f Applications
23 Module de communication
31 Réception par le terminal informatique
32 Emission par le terminal informatique
100 Procédé de transmission
110 Phase d'initialisation
111 Réception par ledit terminal informatique de ladite donnée D et d'un premier état A(n) dudit premier attribut A correspondant à un premier temps T(n) depuis au moins un serveur informatique
112 Utilisation par ledit terminal informatique de ladite donnée D selon le premier état A(n) dudit premier attribut A au premier temps T(n)
113a Réception par ledit terminal informatique d'un deuxième état A(n+1) dudit premier attribut A correspondant à un deuxième temps T(n+1) depuis au moins un serveur informatique
113b Réception par ledit terminal informatique du premier paramètre d'évolution E(n) dudit premier attribut A depuis au moins un serveur informatique
114a Calcul par ledit terminal informatique d'un premier paramètre d'évolution E(n) dudit premier attribut A en fonction de A(n) et de A(n+1)
114b Calcul par ledit terminal informatique du deuxième état A(n+1) en fonction de A(n) et de E(n) 120 Phase d'évolution
121a Utilisation par ledit terminal informatique de ladite donnée D selon le deuxième état A(n+1) dudit premier attribut A au deuxième temps T(n+1)
121b Réception par ledit terminal informatique d'un deuxième paramètre d'évolution E(n+1) dudit premier attribut A depuis au moins un serveur informatique
121c Réception par ledit terminal informatique d'un troisième état A(n+2) dudit premier attribut A au troisième temps T(n+2) depuis au moins un serveur informatique, A(n+2) étant différent de A(n+1) ; puis utilisation par ledit terminal informatique de ladite donnée D selon le troisième état A(n+2) dudit premier attribut A au troisième temps T(n+2).

122a Calcul par ledit terminal informatique d'un troisième état A(n+2) dudit premier attribut A correspondant à un troisième temps T(n+3) en fonction de A(n) et/ou A(n+1) et de E(n)

122b Calcul par ledit terminal informatique d'un troisième état A(n+2) dudit premier attribut A correspondant à un troisième temps T(n+2) en fonction de A(n) et/ou A(n+1) et de E(n+1)

122c Calcul par ledit terminal informatique d'un troisième paramètre d'évolution E(n+1) dudit premier attribut A en fonction de A(n+1) et A(n+2) ; puis, calcul par ledit terminal informatique du quatrième état A(n+3) dudit premier attribut A au quatrième temps T(n+3) en fonction de A(n+2) et de E(n+1).

123a Utilisation par ledit terminal informatique de ladite donnée D selon le troisième état A(n+2) dudit premier attribut A au troisième temps T(n+2)

123b Utilisation par ledit terminal informatique de ladite donnée selon le troisième état A(n+2) dudit premier attribut A au troisième temps T(n+2)

123c Utilisation par ledit terminal informatique de ladite donnée D selon le quatrième état A(n+3) dudit premier attribut A au quatrième temps T(n+3).

130 Phase de resynchronisation

131 Réception par ledit terminal informatique de ladite donnée D1 et d'un état A(n+m) dudit premier attribut A correspondant à un temps T(n+m) depuis au moins un serveur informatique

132 Utilisation par ledit terminal informatique de ladite donnée D1 selon l'état A(n+m) dudit premier attribut A au temps T(n+m)

133a Réception par ledit terminal informatique d'un état A(n+m+1) dudit premier attribut A correspondant à un temps T(n+m+1) depuis au moins un serveur informatique

133b Réception par ledit terminal informatique d'un paramètre d'évolution E(n+m) dudit premier attribut A depuis au moins un serveur informatique

134a Calcul par ledit terminal informatique d'un paramètre d'évolution E(n+m) dudit premier attribut A en fonction de A(n+m) et de A(n+m+1)

134b Calcul par ledit terminal informatique de l'état A(n+m+1) en fonction de A(n+m) et de E(n+m).

## Revendications

1. Procédé (100) de transmission depuis au moins un serveur informatique (20) vers au moins un terminal informatique (10) d'au moins une donnée D présentant au moins un premier attribut A, ledit au moins un serveur informatique (20) étant en communication avec ledit terminal informatique (10), ledit procédé comprenant au moins les phases suivantes :

   i. Au moins une phase d'initialisation (110) comprenant au moins les étapes suivantes :

      a. Réception (111) par ledit terminal informatique (10) depuis au moins un serveur informatique (20) d'au moins:

         ▪ ladite donnée D ;
         ▪ un premier état A(n) dudit premier attribut A correspondant à un premier temps T(n);

      b. Utilisation (112) par ledit terminal informatique (10) de ladite donnée D selon le premier état A(n) dudit premier attribut A au premier temps T(n);
      c. Réception par ledit terminal informatique (10):

         ▪ (113a) d'un deuxième état A(n+1) dudit premier attribut A correspondant à un deuxième temps T(n+1) depuis au moins un serveur informatique (20),
         ▪ Puis, calcul (114a) par ledit terminal informatique (10) d'un premier paramètre d'évolution E(n) dudit premier attribut A en fonction de A(n) et de A(n+1)

            - ou,

         ▪ (113b) du premier paramètre d'évolution E(n) dudit premier attribut A depuis au moins un serveur informatique (20),
         ▪ Puis, calcul (114b) par ledit terminal informatique (10) du deuxième état A(n+1) en fonction de A(n) et de E(n);

ii. Au moins une phase d'évolution (120) comprenant plusieurs itérations des étapes suivantes :

a. Utilisation (121a) par ledit terminal informatique (10) de ladite donnée D selon le deuxième état A(n+1) dudit premier attribut A au deuxième temps T(n+1) ;

b.Puis, calcul (122a) par ledit terminal informatique (10) d'un troisième état A(n+2) dudit premier attribut A correspondant à un troisième temps T(n+2) en fonction de A(n) et/ou A(n+1), et de E(n) ;

c. Puis, utilisation (123a) par ledit terminal informatique (10) de ladite donnée D selon le troisième état A(n+2) dudit premier attribut A au troisième temps T(n+2) ;

Au cours des étapes de la phase d'évolution (120), le premier paramètre d'évolution E(n) étant modifié en un deuxième paramètre d'évolution E(n+1), si :

■ ledit terminal informatique (10) reçoit (121b) un deuxième paramètre d'évolution E(n+1) dudit premier attribut A depuis au moins un serveur informatique (20), E(n+1) étant différent de E(n) ; ledit calcul (122b) par ledit terminal informatique (10) du troisième état A(n+2) correspondant au troisième temps T(n+2) étant alors en fonction de A(n) et/ou A(n+1), et de E(n+1) ;

Au cours des étapes de la phase d'évolution (120), le deuxième état A(n+1) étant modifié en un troisième état A(n+2), et le premier paramètre d'évolution E(n) étant modifié en un deuxième paramètre d'évolution E(n+1) si:

■ ledit terminal informatique (10) reçoit (121c) depuis l'au moins un serveur informatique (20), un troisième état A(n+2) dudit premier attribut A correspondant à un troisième temps T(n+2), la phase d'évolution (120) comprenant alors le calcul (122c) d'un deuxième paramètre d'évolution E(n+1) dudit premier attribut A, en fonction de A(n+1) et de A(n+2).

Et dans lequel l'utilisation (112, 121a, 123a) par ledit terminal informatique (10) de ladite donnée D est prise parmi au moins : un affichage de ladite donnée D via un dispositif d'affichage, une mémorisation de ladite donnée D via un dispositif de mémorisation, une analyse de ladite donnée D via un dispositif d'analyse.

2. Procédé (100) selon la revendication précédente dans lequel l'utilisation par ledit terminal informatique (10) de ladite donnée D comprend au moins une étape d'affichage de ladite donnée D, de préférence ledit terminal informatique (10) comprenant au moins un dispositif d'affichage (11) configuré pour afficher ladite donnée D.

3. Procédé (100) selon l'une quelconque des revendications précédentes dans lequel l'utilisation par ledit terminal informatique (10) de ladite donnée D comprend au moins une étape de mémorisation de ladite donnée D, de préférence ledit terminal informatique (10) comprenant au moins un dispositif de mémorisation configuré pour mémoriser ladite donnée D, de préférence sur un support non transitoire.

4. Procédé (100) selon la revendication précédente dans lequel l'utilisation par ledit terminal informatique (10) de ladite donnée D comprend au moins une étape d'analyse de ladite donnée D, de préférence ledit terminal informatique (10) comprenant au moins un dispositif d'analyse configuré pour analyser ladite donnée D.

5. Procédé (100) selon l'une quelconque des revendications précédentes dans lequel ladite donnée est prise parmi au moins : un pixel, un voxel, une valeur numérique, un objet, une image.

6. Procédé (100) selon l'une quelconque des revendications précédentes dans lequel ledit au moins un premier attribut A est pris parmi au moins : une position, une vitesse, une accélération, une couleur prise parmi une plage de couleurs, un coefficient de transparence et de préférence dans lequel le paramètre d'évolution est pris parmi au moins : une vitesse, une accélération, une trajectoire.

7. Procédé (100) selon l'une quelconque des revendications précédentes dans lequel le premier état, le deuxième état et le troisième état sont pris parmi au moins : une valeur numérique, des coordonnées spatiales, un vecteur vitesse, un vecteur d'accélération, une couleur prise parmi une plage de couleurs, un coefficient de transparence.

8. Procédé (100) selon l'une quelconque des revendications précédentes dans lequel le premier paramètre d'évolution E(n) est égal à $(A(n+1)-A(n))/(T(n+1)-T(n))$, de préférence à la dérivée première de $(A(n+1)-A(n))/(T(n+1)-T(n))$ par rapport à T.

**9.** Procédé (100) selon l'une quelconque des revendications précédentes dans lequel le deuxième état A(n+1) est égal à E(n)*(T(n+1)-T(n))+A(n), de préférence à l'intégrale de E(n)*(T(n+1)-T(n))+A(n), T allant de T(n) à T(n+1).

**10.** Procédé (100) selon l'une quelconque des revendications précédentes dans lequel le troisième état A(n+2) est égal à E(n+1)*(T(n+2)-T(n+1))+A(n+1), de préférence à l'intégrale de E(n+1)*(T(n+2)-T(n+1))+A(n+1), T allant de T(n+1) à T(n+2) et de préférence dans lequel le deuxième paramètre d'évolution E(n+1) est égal à (A(n+2)-A(n+1))/(T(n+2)-T(n+1)), de préférence à la dérivée première de (A(n+2)-A(n+1))/(T(n+2)-T(n+1)) par rapport à T.

**11.** Procédé (100) selon l'une quelconque des revendications 1 à 7 dans lequel le troisième état A(n+2) est égal à E(n)*(T(n+2)-T(n))+A(n), de préférence à l'intégrale de E(n)*(T(n+2)-T(n))+A(n), T allant de T(n) à T(n+2), et de préférence dans lequel le deuxième paramètre d'évolution E(n+1) est égal à (A(n+2)-A(n))/(T(n+2)-T(n)), de préférence à la dérivée première de (A(n+2)-A(n))/(T(n+2)-T(n)) par rapport à T.

**12.** Procédé (100) selon l'une quelconque des revendications précédentes dans lequel l'étape de réception (111) par ledit terminal informatique (10) de ladite donnée D depuis au moins un serveur informatique (20) et l'étape de réception (111) par ledit terminal informatique (10) d'un premier état A(n) dudit premier attribut A correspondant au premier temps T(n) depuis au moins un serveur informatique (20) sont réalisées en une seule et même étape.

**13.** Procédé (100) selon l'une quelconque des revendications précédentes comprenant une phase de resynchronisation (130) comprenant au moins les étapes suivantes :

> i. Réception (131) par ledit terminal informatique (10) de ladite donnée D depuis au moins un serveur informatique (20) ;
> ii. Réception (131) par ledit terminal informatique (10) d'un état A(n+m) dudit premier attribut A correspondant à un temps T(n+m) depuis au moins un serveur informatique (20) ;
> iii. Utilisation (132) par ledit terminal informatique (10) de ladite donnée D selon l'état A(n+m) dudit premier attribut A au temps T(n+m);
> iv. Réception par ledit terminal informatique (10) :
>
>> ▪ (133a) d'un état A(n+m+1) dudit premier attribut A correspondant à un temps T(n+m+1) depuis au moins un serveur informatique (20),
>> ▪ Puis, calcul (134a) par ledit terminal informatique (10) d'un paramètre d'évolution E(n+m) dudit premier attribut A en fonction de A(n+m) et de A(n+m+1) ;
>>
>>> - ou,
>>
>> ▪ (133b) d'un paramètre d'évolution E(n+m) dudit premier attribut A depuis au moins un serveur informatique (20),
>> ▪ Puis, calcul (134b) par ledit terminal informatique (10) de l'état A(n+m+1) en fonction de A(n+m) et de E(n+m).

**14.** Circuit électronique comprenant une pluralité de composants électroniques configurés pour exécuter une série d'ordres mettant en œuvre le procédé (100) selon l'une quelconque des revendications précédentes.

**15.** Terminal informatique (10) comprenant au moins un circuit électronique selon la revendication précédente, le terminal comprenant au moins une interface utilisateur (16), au moins un dispositif d'affichage (11) et au moins un module de communication (15) avec au moins un serveur informatique (20).

**16.** Produit programme d'ordinateur, de préférence enregistré sur un support non transitoire, comprenant des instructions, qui lorsqu'elles sont effectuées par au moins l'un parmi un processeur et un ordinateur, font que l'au moins un parmi le processeur et l'ordinateur, exécute le procédé selon l'une quelconque des revendications 1 à 13.

**Patentansprüche**

**1.** Verfahren (100) zur Übertragung von mindestens einem Computerserver (20) zu mindestens einem Computerendgerät (10) von mindestens einer Angabe D mit mindestens einem ersten Attribut A, wobei der mindestens eine Computerserver (20) mit dem Computerendgerät (10) in Kommunikation steht, wobei das Verfahren mindestens die folgenden Phasen umfasst:

i. Mindestens eine Initialisierungsphase (110), die mindestens die folgenden Schritte umfasst:

**a.** Empfang (111) durch das Computerendgerät (10) von mindestens einem Computerserver (20) von mindestens:

- Angabe D;
- einem ersten Zustand $A(n)$ des ersten Attributs **A,** der einer ersten Zeit $T(n)$ entspricht;

**b.** Nutzung (112) durch das Computerendgerät (10) der Angabe D gemäß dem ersten Zustand $A(n)$ des ersten Attributs A zur ersten Zeit $T(n)$;
**c.** Empfang durch das Computerendgerät (10):

- (113a) eines zweiten Zustands $A(n+1)$ des ersten Attributs **A,** das einer zweiten Zeit $T(n+1)$ von mindestens einem Computerserver (20) entspricht,
- Dann Berechnung (114a) durch das Computerendgerät (10) eines ersten Entwicklungsparameters $E(n)$ des ersten Attributs A in Abhängigkeit von $A(n)$ und $A(n+1)$

- oder,

- (113b) des ersten Entwicklungsparameters $E(n)$ des ersten Attributs A von mindestens einem Computerserver (20),
- Dann Berechnung (114b) durch das Computerendgerät (10) des zweiten Zustands $A(n+1)$ in Abhängigkeit von $A(n)$ und $E(n)$;

ii. Mindestens eine Entwicklungsphase (120), die mehrere Iterationen der folgenden Schritte umfasst:

**a.** Nutzung (121a) durch das Computerendgerät (10) der Angabe D gemäß dem zweiten Zustand $A(n+1)$ des ersten Attributs A zur zweiten Zeit $T(n+1)$;
**b.** Dann Berechnung (122a) durch das Computerendgerät (10) eines dritten Zustands $A(n+2)$ des ersten Attributs **A,** das einer dritten Zeit $T(n+2)$ in Abhängigkeit von $A(n)$ und/oder $A(n+1)$ und $E(n)$ entspricht;
**c.** Dann Nutzung (123a) durch das Computerendgerät (10) der Angabe D gemäß dem dritten Zustand $A(n+2)$ des ersten Attributs A zur dritten Zeit $T(n+2)$;

Während der Schritte der Entwicklungsphase (120), wobei der erste Entwicklungsparameter $E(n)$ in einen zweiten Entwicklungsparameter $E(n+1)$ geändert wird, wenn:

- das Computerendgerät (10) einen zweiten Entwicklungsparameter $E(n+1)$ des ersten Attributs A von mindestens einem Computerserver (20) empfängt (121b), wobei $E(n+1)$ sich von $E(n)$ unterscheidet; die Berechnung (122b) durch das Computerendgerät (10) des dritten Zustands $A(n+2)$, der der dritten Zeit $T(n+2)$ entspricht, ist dann in Abhängigkeit von $A(n)$ und/oder $A(n+1)$ und von $E(n+1)$;

Während der Schritte der Entwicklungsphase (120), wobei der zweite Zustand $A(n+1)$ in einen dritten Zustand $A(n+2)$ geändert wird und der erste Entwicklungsparameter $E(n)$ in einen zweiten Entwicklungsparameter $E(n+1)$ geändert wird, wenn:

- das Computerendgerät (10) empfängt (121c) von mindestens einem Computerserver (20) einen dritten Zustand $A(n+2)$ des ersten Attributs A, der einer dritten Zeit $T(n+2)$ entspricht, wobei die Entwicklungsphase (120) dann die Berechnung (122c) eines zweiten Entwicklungsparameters $E(n+1)$ des ersten Attributs A in Abhängigkeit von $A(n+1)$ und $A(n+2)$ umfasst.

Und wobei die Nutzung (112, 121a, 123a) der Angabe D durch das Computerendgerät (10) mindestens aus dem Folgenden genommen wird: eine Anzeige der Angabe D über eine Anzeigevorrichtung, eine Speicherung der Angabe D über eine Speichervorrichtung, eine Analyse der Angabe D über eine Analysevorrichtung.

**2.** Verfahren (100) nach dem vorhergehenden Anspruch, bei dem die Nutzung der Angabe D durch das Computerendgerät (10) mindestens einen Schritt zur Anzeige der Angabe D umfasst, vorzugsweise das Computerendgerät (10) mindestens eine Anzeigevorrichtung (11) umfasst, die so eingerichtet ist, dass sie die Angabe D anzeigt.

3. Verfahren (100) nach einem der vorhergehenden Ansprüche, bei dem die Nutzung der Angabe D durch das Computerendgerät (10) mindestens einen Schritt zum Speichern der Angabe D umfasst, vorzugsweise das Computerendgerät (10), das mindestens eine Speichervorrichtung umfasst, die zum Speichern der Angabe D, vorzugsweise auf einem nicht vorübergehenden Medium, eingerichtet ist.

4. Verfahren (100) nach dem vorhergehenden Anspruch, wobei die Nutzung der Angabe D durch das Computerendgerät (10) mindestens einen Analyseschritt der Angabe D umfasst, vorzugsweise das Computerendgerät (10) mindestens eine Analysevorrichtung umfasst, die zur Analyse der Angabe D eingerichtet ist.

5. Verfahren (100) nach einem der vorhergehenden Ansprüche, wobei die Angabe aus mindestens einem Pixel, einem Voxel, einem numerischen Wert, einem Objekt, einem Bild genommen wird.

6. Verfahren (100) nach einem der vorhergehenden Ansprüche, wobei das mindestens eine erste Attribut A aus mindestens: einer Position, einer Geschwindigkeit, einer Beschleunigung, einer Farbe aus einem Farbbereich, einem Transparenzkoeffizienten und vorzugsweise, wobei der Entwicklungsparameter aus mindestens einer Geschwindigkeit, einer Beschleunigung, einer Bahn genommen wird.

7. Verfahren (100) nach einem der vorhergehenden Ansprüche, wobei der erste Zustand, der zweite Zustand und der dritte Zustand aus mindestens: einem numerischen Wert, räumlichen Koordinaten, einem Geschwindigkeitsvektor, einem Beschleunigungsvektor, einer Farbe aus einem Farbbereich, einem Transparenzkoeffizienten genommen werden.

8. Verfahren (100) nach einem der vorhergehenden Ansprüche, wobei der erste Entwicklungsparameter $E(n)$ gleich $(A(n+1)-A(n))/(T(n+1)-T(n))$ ist, vorzugsweise der ersten Ableitung von $(A(n+1)-A(n))/(T(n+1)-T(n))$ gegenüber **T.**

9. Verfahren (100) nach einem der vorhergehenden Ansprüche, wobei der zweite Zustand $A(n+1)$ gleich $E(n)^*(T(n+1)-T(n))+A(n)$ ist, vorzugsweise der Integralwert von $E(n)^*(T(n+1)-T(n))+A(n)$, T von $T(n)$ bis $T(n+1)$.

10. Verfahren (100) nach einem der vorhergehenden Ansprüche, wobei der dritte Zustand $A(n+2)$ gleich $E(n+1)^*(T(n+2)-T(n+1))+A(n+1)$ ist, vorzugsweise als Integralwert von $E(n+1)^*(T(n+2)-T(n+1))+A(n+1)$, T von $T(n+1)$ bis $T(n+2)$ und vorzugsweise der zweite Entwicklungsparameter $E(n+1)$ gleich $(A(n+2)-A(n+1))/(T(n+2)-T(n+1))$, vorzugsweise als erste Ableitung von $(A(n+2)-A(n+1))/T(n+2)-T(n+1))$ zu T ist.

11. Verfahren (100) nach einem der Ansprüche 1 bis 7, wobei der dritte Zustand $A(n+2)$ gleich $E(n)^*(T(n+2)-T(n))+A(n)$ ist, vorzugsweise als Integralwert von $E(n)^*(T(n+2)-T(n))+A(n)$, T von $T(n)$ bis $T(n+2)$, und bevorzugt, wobei der zweite Entwicklungsparameter $E(n+1)$ gleich $(A(n+2)-A(n))/(T(n+2)-T(n))$ ist, vorzugsweise als erste Ableitung von $(A(n+2)-A(n))/(T(n+2)-T(n))$ gegenüber T.

12. Verfahren (100) nach einem der vorhergehenden Ansprüche, wobei der Schritt des Empfangs (111) durch das Computerendgerät (10) der Angabe D von mindestens einem Computerserver (20) und der Schritt des Empfangs (111) durch das Computerendgerät (10) eines ersten Zustands $A(n)$ des ersten Attributs A, das der ersten Zeit $T(n)$ von mindestens einem Computerserver (20) entspricht, in einem einzigen Schritt durchgeführt werden.

13. Verfahren (100) nach einem der vorhergehenden Ansprüche, das eine Resynchronisierungsphase (130) umfasst, die mindestens die folgenden Schritte umfasst:

   i. Empfang (131) durch das Computerendgerät (10) der Angabe D von mindestens einem Computerserver (20);
   ii. Empfang (131) durch das Computerendgerät (10) eines Zustands $A(n+m)$ des ersten Attributs A, das einer Zeit $T(n+m)$ von mindestens einem Computerserver (20) entspricht;
   iii. Nutzung (132) durch das Computerendgerät (10) der Angabe D gemäß dem Zustand $A(n+m)$ des ersten Attributs A zur Zeit $T(n+m)$;
   iv. Empfang durch das genannte Computerendgerät (10):

      ▪ (133a) eines Zustands $A(n+m+1)$ des ersten Attributs A, das einer Zeit $T(n+m+1)$ von mindestens einem Computerserver (20) entspricht,

■ Dann Berechnung (134a) durch das Computerendgerät (10) eines Entwicklungsparameters E(n+m) des ersten Attributs A in Abhängigkeit von A(n+m) und A(n+m+1);

- oder,

■ (133b) eines Entwicklungsparameters E(n+m) des ersten Attributs A von mindestens einem Computerserver (20),
■ Dann Berechnung (134b) durch das Computerendgerät (10) des Zustands A(n+m+1) in Abhängigkeit von A(n+m) und E (n+m) .

14. Elektronische Schaltung, die eine Vielzahl von elektronischen Komponenten umfasst, die so eingerichtet sind, dass sie eine Reihe von Befehlen ausführen, die das Verfahren (100) nach einem der vorhergehenden Ansprüche ausführen.

15. Computerendgerät (10), das mindestens eine elektronische Schaltung nach dem vorhergehenden Anspruch umfasst, wobei das Endgerät mindestens eine Benutzerschnittstelle (16), mindestens eine Anzeigevorrichtung (11) und mindestens ein Kommunikationsmodul (15) mit mindestens einem Computerserver (20) umfasst.

16. Computerprogrammprodukt, vorzugsweise auf einem nicht vorübergehenden Medium gespeichert, umfassend Anweisungen, die, wenn sie von mindestens einem Prozessor und einem Computer ausgeführt werden, bewirken, dass der mindestens eine zwischen dem Prozessor und dem Computer das Verfahren nach einem der Ansprüche 1 bis 13 ausführt.

**Claims**

1. A method (100) for transmitting, from at least one computing server (20) to at least one computing terminal (10), at least one piece of data D having at least one first attribute A, said at least one computing server (20) being in communication with said computing terminal (10), said method comprising at least the following phases:

   i. At least one initialisation phase (110) comprising at least the following steps of:

   a. Receiving (111), by said computing terminal (10) from at least one computing server (20), at least:

   ■ said piece of data D;
   ■ a first state A(n) of said first attribute A corresponding to a first time T(n);

   b. Using (112), by said computing terminal (10), said piece of data D according to the first state A(n) of said first attribute A at the first time T(n);
   c. Receiving, by said computing terminal (10):

   ■ (113a) a second state A(n+1) of said first attribute A corresponding to a second time T(n+1) from at least one computing server (20),
   ■ Then, calculating (114a), by said computing terminal (10), a first evolution parameter E(n) of said first attribute A as a function of A(n) and A(n+1)

   - or,

   ■ (113b) the first evolution parameter E(n) of said first attribute A from at least one computing server (20),
   ■ Then, calculating (114b), by said computing terminal (10), the second state A(n+1) as a function of A(n) and E(n);

   ii. At least one evolution phase (120) comprising several iterations of the following steps of:

   a. Using (121a), by said computing terminal (10), said piece of data D according to the second state A(n+1) of said first attribute A at the second time T(n+1);
   b. Then, calculating (122a), by said computing terminal (10), a third state A(n+2) of said first attribute A corresponding to a third time T(n+2) as a function of A(n) and/or A(n+1), and of E(n);

c. Then, using (123a), by said computing terminal (10), said piece of data D according to the third state A(n+2) of said first attribute A at the third time T(n+2);

During the steps of the evolution phase (120), the first evolution parameter E(n) being modified to a second evolution parameter E(n+1), if:

- said computing terminal (10) receives (121b) a second evolution parameter E(n+1) of said first attribute A from at least one computing server (20), E(n+1) being different from E(n); said calculating (122b), by said computing terminal (10), the third state A(n+2) corresponding to the third time T(n+2) being then as a function of A(n) and/or A(n+1), and of E(n+1);

During the steps of the evolution phase (120), the second state A(n+1) being modified to a third state A(n+2), and the first evolution parameter E(n) being modified to a second evolution parameter E(n+1) if:

- said computing terminal (10) receives (121c), from the at least one computing server (20), a third state A(n+2) of said first attribute A corresponding to a third time T(n+2), the evolution phase (120) then comprising calculating (122c) a second evolution parameter E(n+1) of said first attribute A, as a function of A(n+1) and A(n+2).

And wherein using (112, 121a, 123a), by said computing terminal (10), said piece of data D is taken from at least: displaying said piece of data D via a display device, storing said piece of data D via a memory device, analysing said piece of data D via an analysis device.

2. The method (100) according to the preceding claim, wherein using, by said computing terminal (10), said piece of data D comprises at least one step of displaying said piece of data D, preferably said computing terminal (10) comprising at least one display device (11) configured to display said piece of data D.

3. The method (100) according to any of the preceding claims, wherein using, by said computing terminal (10), said piece of data D comprises at least one step of storing said piece of data D, preferably said computing terminal (10) comprising at least one storage device configured to store said piece of data D, preferably on a non-transitory medium.

4. The method (100) according to the preceding claim, wherein using, by said computing terminal (10), said piece of data D comprises at least one step of analysing said piece of data D, preferably said computing terminal (10) comprising at least one analysis device configured to analyse said piece of data D.

5. The method (100) according to any of the preceding claims, wherein said piece of data is taken from at least: a pixel, a voxel, a numerical value, an object, an image.

6. The method (100) according to any of the preceding claims, wherein said at least one first attribute A is taken from at least: a position, a speed, an acceleration, a colour taken from a colour range, a transparency coefficient, and preferably wherein the evolution parameter is taken from at least: a speed, an acceleration, a trajectory.

7. The method (100) according to any of the preceding claims, wherein the first state, the second state, and the third state are taken from at least: a numerical value, spatial coordinates, a speed vector, an acceleration vector, a colour taken from a colour range, a transparency coefficient.

8. The method (100) according to any of the preceding claims, wherein the first evolution parameter E(n) is equal to $(A(n+1)-A(n))/(T(n+1)-T(n))$, preferably to the first derivative of $(A(n+1)-A(n))/(T(n+1)-T(n))$ relative to T.

9. The method (100) according to any of the preceding claims, wherein the second state A(n+1) is equal to $E(n)*(T(n+1)-T(n))+A(n)$, preferably to the integral of $E(n)*(T(n+1)-T(n))+A(n)$, T ranging from T(n) to T(n+1).

10. The method (100) according to any of the preceding claims, wherein the third state A(n+2) is equal to $E(n+1)*(T(n+2)-T(n+1))+A(n+1)$, preferably to the integral of $E(n+1)*(T(n+2)-T(n+1))+A(n+1)$, T ranging from T(n+1) to T(n+2), and preferably wherein the second evolution parameter E(n+1) is equal to $(A(n+2)-A(n+1))/(T(n+2)-T(n+1))$, preferably to the first derivative of $(A(n+2)-A(n+1))/(T(n+2)-T(n+1))$ relative to T.

11. The method (100) according to any of claims 1 to 7, wherein the third state A(n+2) is equal to $E(n)*(T(n+2)-T(n))+A(n)$,

preferably to the integral of E(n)*(T(n+2)-T(n))+A(n), T ranging from T(n) to T(n+2), and preferably wherein the second evolution parameter E(n+1) is equal to (A(n+2)-A(n))/(T(n+2)-T(n)), preferably to the first derivative of (A(n+2)-A(n))/(T(n+2)-T(n)) relative to T.

12. The method (100) according to any of the preceding claims, wherein the step of receiving (111), by said computing terminal (10), said piece of data D from at least one computing server (20) and the step of receiving (111), by said computing terminal (10), a first state A(n) of said first attribute A corresponding to the first time T(n) from at least one computing server (20) are carried out in one and a single step.

13. The method (100) according to any of the preceding claims, comprising a resynchronisation phase (130) comprising at least the following steps of:

> i. Receiving (131), by said computing terminal (10), said piece of data D from at least one computing server (20);
> ii. Receiving (131), by said computing terminal (10), a state A(n+m) of said first attribute A corresponding to a time T(n+m) from at least one computing server (20);
> iii. Using (132), by said computing terminal (10), said piece of data D according to the state A(n+m) of said first attribute A at the time T(n+m);
> iv. Receiving, by said computing terminal (10):

>> ▪ (133a) a state A(n+m+1) of said first attribute A corresponding to a time T(n+m+1) from at least one computing server (20),
>> ▪ Then, calculating (134a), by said computing terminal (10), an evolution parameter E(n+m) of said first attribute A as a function of A(n+m) and A(n+m+1);

>> - or,

>> ▪ (133b) an evolution parameter E(n+m) of said first attribute A from at least one computing server (20),
>> ▪ Then, calculating (134b), by said computing terminal (10), the state A(n+m+1) as a function of A(n+m) and E(n+m).

14. An electronic circuit comprising a plurality of electronic components configured to execute a series of commands implementing the method (100) according to any of the preceding claims.

15. A computing terminal (10) comprising at least one electronic circuit according to the preceding claim, the terminal comprising at least one user interface (16), at least one display device (11) and at least one communication module (15) with at least one computing server (20).

16. A computer program product, preferably recorded on a non-transitory medium, comprising instructions, which when performed by at least one of a processor and a computer, cause the at least one of the processor and the computer to execute the method according to any of claims 1 to 13.

Fig. 1

Fig. 2

100

```
┌─────────────────────────────────────────┐
│                   110                    │
└─────────────────────────────────────────┘
                    │
                    ▼
        ┌───────────────────────┐
        │          111          │
        └───────────────────────┘
                    │
                    ▼
        ┌───────────────────────┐
        │          112          │
        └───────────────────────┘
              │              │
              ▼              ▼
        ┌─────────┐    ┌─────────┐
        │  113a   │    │  113b   │
        └─────────┘    └─────────┘
              │              │
              ▼              ▼
        ┌─────────┐    ┌─────────┐
        │  114a   │    │  114b   │
        └─────────┘    └─────────┘
              │              │
              ▼              ▼
┌─────────────────────────────────────────┐
│                   120                    │
└─────────────────────────────────────────┘
         │            │            │
         ▼            ▼            ▼
    ┌────────┐   ┌────────┐   ┌────────┐
    │  121a  │   │  121b  │   │  121c  │
    └────────┘   └────────┘   └────────┘
         │            │            │
         ▼            ▼            ▼
    ┌────────┐   ┌────────┐   ┌────────┐
    │  122a  │   │  122b  │   │  122c  │
    └────────┘   └────────┘   └────────┘
         │            │            │
         ▼            ▼            ▼
    ┌────────┐   ┌────────┐   ┌────────┐
    │  123a  │   │  123b  │   │  123c  │
    └────────┘   └────────┘   └────────┘
         │            │            │
         ▼            ▼            ▼
┌─────────────────────────────────────────┐
│                   130                    │
└─────────────────────────────────────────┘
                    │
                    ▼
        ┌───────────────────────┐
        │          131          │
        └───────────────────────┘
                    │
                    ▼
        ┌───────────────────────┐
        │          132          │
        └───────────────────────┘
              │              │
              ▼              ▼
        ┌─────────┐    ┌─────────┐
        │  133a   │    │  133b   │
        └─────────┘    └─────────┘
              │              │
              ▼              ▼
        ┌─────────┐    ┌─────────┐
        │  134a   │    │  134b   │
        └─────────┘    └─────────┘
```

Fig. 3

T(n) | D | · · · · · · · · · · · · · · · · · · A
                                               ⌐ · · · · · A(n)

E(n)

T(n+1) | D | · · · · · · · · · · · · · · · A
                                           ⌐ · · · · · A(n+1)

E(n+1)

T(n+2) | D | · · · · · · · · · · · · · · A
                                         ⌐ · · · · · A(n+2)

Fig. 4

Fig. 5

Fig. 6

Fig. 7

EP 4 004 731 B1

234

235

230

236

237

238

238

231

236

238

239

239

232

236

238

233

236

237

Fig. 8

Fig. 9

EP 4 004 731 B1

Fig. 10

Fig. 11

Fig. 12

213

264 | 265        265 | 264

CMD/DATA

Fig. 13

212 ou 213

264 | 265        266

CMD/DATA

Fig. 14

201

267

214        214        214

Fig. 15

268

270 271

269

270 272

Fig. 16

268

270 271 273

274

269

270 272 275 276 277

Fig. 17

268

270 271 278

269

270 272 279 280

Fig. 18

| Côté Serveur ou transmission | | | | | | | | |
|---|---|---|---|---|---|---|---|---|
| | | | | | | | | |
| Périodes T | T0 | T1 | T2 | T3 | ... | T(n-1) | Tn | T(n+1) |
| **Etat (des commandes ou données)** | | | | | | | | |
| Position/Valeur | x0 | x1 | x2 | x3 | | | xn | |
| Vitesse | v0=0 | v1 = (x1-x0)/T | v2 = (x2-x1)/T | v3 = (x3-x2)/T | | | vn=(x(n)-x(n-1))/T | |
| Accélération | a0=0 | a1 = (x1-x0)/T^2 | a2= (v2-v1)/T^2 | a3= (v3-v2)/T^2 | | | a(n)=v(n)-v(n-1)/T^2 | |
| **Commande à transmettre à chaque période (Tn)** | transmettre (x0) | (x1) | si (a2-a1)!=0 alors transmettre (a2-a1) | si (a3-a2)!=0 alors transmettre (a3-a2) | | | si(a(n)-a(n-1))!0 alors transmettre (a(n)-a(n-1)) | |

Fig. 19a

| Côté Client ou réception | | | | | | | | |
|---|---|---|---|---|---|---|---|---|
| | | | | | | | | |
| Périodes T' | T'0 | T'1 | T'2 | ... | ... | T('n-1) | T'n | T'(n+1) |
| **Commandes reçues à T(n)+ temps de transmition** | x0 | x1 | a2-a1 | | | | a(n)-a(n-1) | |
| | | | | | | | | |
| **Nouvel état** | | | | | | | | |
| **Prédictif** | | | | | | | | |
| Accélération | N/A | N/A | ap2=ac1 | | | | ap(n)=ac(n-1) | ap(n+1)=ac(n) |
| Vitesse | N/A | N/A | vp2=vc1+ap2*T | | | | vp(n)=vc(n-1)+ap(n)*T | vp(n+1)=vc(n)+ap(n+1)*T |
| Position/Valeur | N/A | N/A | xp2=xc1+vc1*T +1/2*ap2*T^2 | | | | xp(n)=xc(n-1)+vc(n-1)*T+1/2*ap(n)*T^2 | xp(n+1)=xc(n)+vc(n)*T+1/2*ap(n+1)*T^2 |
| **Correctif** | | | | | | | | |
| Accélération | | ac1=(x1-x0)/T^2 | ac2=ac1+(a2-a1) | | | | ac(n)=ac(n-1)+ (a(n)-a(n-1)) | |
| Position/Valeur | xc0=x0 | xc1=x1 | xc2=xc1+vc1*T +1/2*ac2*T^2 | | | | xc(n)=xc(n-1)+vc(n-1)*T+1/2*ac(n)*T^2 | |
| Vitesse | | vc1=(x1-x0)/T | vc2=(xc2-xc1)/T | | | | vc(n)=(xc(n)-xc(n-1))/T | |
| **Action à T'n : utiliser la valeur prédite tant qu'aucune commande n'est reçue** | Non Applicable | N/A | Attibuer xp2 | | | | Attribuer xp(n) | |
| **Action quand la commande émise à Tn est reçue** | Attribuer xc0 | Attibuer xc1, | Si a2=a1, xc2=xp2 : pas de correction appliquée, sinon attibuer xc2. | | | | Si a(n)=a(n-1), xc(n)=xp(n) : pas de correction appliquée, sinon attribuer xc(n) | |
| | | Sauvegarder vc1 | Sauvergarder xc2, | | | | Sauvergarder xc(n), | |
| | | | Sauvegarder vc2, | | | | Sauvergarder vc(n), | |
| | | | Sauvegarder ac2. | | | | Sauvergarder ac(n). | |

Fig. 19b

EP 4 004 731 B1

| Legende | | | | |
|---|---|---|---|---|
| **T** | Période côté Serveur | **x(n)** | Position/valeur à la periode n | |
| **T'** | Periode côté Client (en general T=T') | **v(n)** | Vitesse à la période n | |
| **Tn** | Début de la n ième période T | **a(n)** | Accélération à periode n | |
| **T'n** | Début de la n ième période T' | **xp(n)** | Position /valeur prédictive à la periode n | |
| **T'n-Tn** | Temps de transmission | **vp(n)** | Vitesse prédictive à la période n | |
| **N/A** | Non Applicable | **ap(n)** | Accélération prédictive à la période n | |
| | | **xc(n)** | Position/valeur corrective à la période n | |
| | | **vc(n)** | Vitesse corrective à la période n | |
| | | **ac(n)** | Acceleration corrective à la période n | |

EP 4 004 731 B1

Fig. 19c

**EP 4 004 731 B1**

**Documents brevets cités dans la description**

- US 2013007221 A1

- FR 2975554 A1